# EUROPÄISCHE PATENTSCHRIFT

(11) **EP 3 648 955 B1**
(45) Veröffentlichungstag und Bekanntmachung des Hinweises auf die Patenterteilung: **02.10.2024**
(21) Anmeldenummer: 18752441.8
(22) Anmeldetag: 02.08.2018
(51) Int. Cl.: B29C 64/393, B29C 64/153, B22F 3/105, B33Y 10/00, B33Y 30/00, B33Y 50/02, G06F 30/00, B22F 10/38, B22F 10/85, B22F 10/28

(54) **OPTIMIERTES SEGMENTIERUNGSVERFAHREN**
OPTIMIZED SEGMENTING METHOD
PROCÉDÉ OPTIMISÉ DE SEGMENTATION

(30) Priorität: 07.08.2017 DE 102017213720
(43) Veröffentlichungstag der Anmeldung: 13.05.2020
(73) Patentinhaber: EOS GmbH Electro Optical Systems, 82152 Krailling (DE)
(72) Erfinder: GÖTH, Michael, 81677 München (DE); HÜMMELER, Ludger, 82131 Gauting (DE); BOCKSTALLER, Alexander, 82131 Stockdorf (DE)
(74) Vertreter: Prüfer & Partner mbB Patentanwälte · Rechtsanwälte
(86) Internationale Anmeldenummer: PCT/EP2018/071079
(87) Internationale Veröffentlichungsnummer: WO 2019/030127

(56) Entgegenhaltungen:
- EP-A1- 3 127 635
- WO-A1-2015/000854
- CN-A- 103 231 055
- US-A1- 2016 263 832
- D D GU ET AL: "Laser additive manufacturing of metallic components: materials, processes and mechanisms", INTERNATIONAL MATERIALS REVIEWS, vol. 57, no. 3, 1 May 2012 (2012-05-01), US, pages 133 - 164, XP055420443, ISSN: 0950-6608, DOI: 10.1179/1743280411Y.0000000014

## Beschreibung

Die Erfindung betrifft ein Verfahren und eine Vorrichtung zur Bereitstellung von Steuerdaten für eine additive Herstellvorrichtung, ein entsprechend angepasstes additives Herstellverfahren, eine entsprechend angepasste additive Herstellvorrichtung und ein entsprechend angepasstes Computerprogramm.

Additive Herstellvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise mittels Zufuhr von Wärmeenergie zum Aufbaumaterial durch Bestrahlen desselben mit elektromagnetischer Strahlung oder Teilchenstrahlung (z.B. Lasersintern (SLS oder DMLS) oder Laserschmelzen oder Elektronenstrahlschmelzen) oder durch Herbeiführen einer Vernetzungsreaktion im Aufbaumaterial (z.B. Stereolithographie) herbeigeführt werden.

WO 2015/000854 A1 beschreibt Verfahren zum schichtweisen Herstellen eines dreidimensionalen Objekts, bei dem ein pulverförmiges oder flüssiges Aufbaumaterial, das mittels Einwirkung von elektromagnetischer oder Partikelstrahlung verfestigbar ist, in Schichten mit einer Schichtdicke d aufgetragen wird, und in jeder Schicht jeweils die Stellen verfestigt werden, die einem dieser Schicht zugeordneten Querschnitt des Objekts entsprechen. Dabei besteht jeder Querschnitt aus einem Konturbereich und einem Innenbereich und das Verfahren enthält folgenden Teilschritt: Es wird in einer Folge von N aufeinanderfolgenden Querschnitten, wobei N eine ganze Zahl größer als 1 ist, in jedem Querschnitt ein Teilbereich als kritischer Bereich definiert und der Rest des Querschnitts als nichtkritischer Bereich definiert. Insbesondere wird eine Anzahl von N Schichten nacheinander aufgetragen, ohne dass eine Verfestigung der nichtkritischen Bereiche erfolgt. Erst nach dem Auftrag der N-ten Schicht erfolgt in allen N Schichten eine Verfestigung der der nichtkritischen Bereiche aller N Schichten.

EP 3 127 635 A1 beschreibt ein strahlungsbasiertes additives Herstellverfahren, bei dem ein Objekt hergestellt wird, welches einen seitlichen Überhangbereich aufweist. Zur Verhinderung einer Gestaltänderung des Überhangbereichs, da dieser von unverfestigt bleibendem Pulver umgeben ist, wird im Überhangbereich die in das Aufbaumaterial einzutragende Strahlungsenergie verringert. Dabei werden wird an jenen Stellen des Überhangbereichs, die am weitesten aus dem Objekt ragen, die einzutragende Energie am stärksten vermindert.

US 2016/263832 beschreibt eine Komponente eines CAM-Systems, die einem 3D-Drucker vorgibt, Material von einem Druckkopf spiralförmig in einer Schicht aufzutragen.

CN 103 231 055 A beschreibt ein differentielles 3D-Druckverfahren, bei dem jede Schicht in einen Außen-, Mittel- und Innenbereich unterteilt wird, bei dem der Laser im Außen-, Mittel- und Innenbereich mit unterschiedlichen Geschwindigkeiten bewegt wird.

Der Artikel D. D. Gu et al: "Laser additive manufacturing of metallic components: materials, processes and mechanisms" in INTERNATIONAL MATERIALS REVIEWS, Bd. 57, Nr. 3, S. 133-164 gibt einen Überblick über laserbasierte additive Herstellverfahren.

Die europäische Patentanmeldung EP 2 565 018 A1 widmet sich dem Problem, dass beim schichtweisen Aufbau von Bauteilen mit Hilfe additiver Herstellverfahren beim Abkühlen bzw. Aushärten der Aufbaumaterialien Spannungen entstehen, die zu einem Bauteilverzug führen. Zur Lösung dieses Problems wird vorgeschlagen, das herzustellende Bauteil in 3D-Volumenbereiche zu unterteilen, die jeweils für sich durch Verfestigen des Baumaterials realisiert werden. Dabei ist es das Ziel, die Größe und Form der Volumenbereiche sowie insbesondere den Verlauf der Außenflächen der Volumenbereiche so zu optimieren, dass die sich nach Fertigstellung des Bauteils ergebenden Spannungen minimal sind. Hierbei ist entweder vorgesehen, einen Spalt zwischen zwei Volumenbereichen zu lassen oder aber Volumenbereiche miteinander überlappen zu lassen.

Die Erfinder haben festgestellt, dass es durch die Einführung von Volumenbereichen im herzustellenden Objekt, die jeweils für sich und gegebenenfalls auch mit unterschiedlichen Materialverfestigungsparametern verfestigt werden, Probleme hinsichtlich der Homogenität, insbesondere der Festigkeit, an den Stellen geben kann, an denen Volumenbereiche aneinandergrenzen. Die Aufgabe der vorliegenden Erfindung ist es daher, ein Verfahren und eine Vorrichtung bereitzustellen, mittels derer die Homogenität von durch ein additives Herstellverfahren hergestellten Objekten verbessert werden kann.

Die Aufgabe wird gelöst durch ein computergestütztes Verfahren nach Anspruch 1, ein additives Herstellverfahren nach Anspruch 10, eine Vorrichtung nach Anspruch 11, ein Computerprogramm nach Anspruch 12 und eine additive Herstellvorrichtung nach Anspruch 13. Weiterbildungen der Erfindung werden in den abhängigen Ansprüchen beansprucht. Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt. Ferner können die im Zusammenhang mit einer Vorrichtung beschriebenen Merkmale auch zur Weiterbildung einer anderen erfindungsgemäßen Vorrichtung genutzt werden, selbst wenn dies nicht explizit angegeben wird.

Ein erfindungsgemäßes computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem eine Energieeintragseinrichtung zum Eintragen von Energie in das Aufbaumaterial diese Stellen mit mindestens einem Energiestrahlbündel gemäß einem Satz von Energieeintragsparametern abtastet, weist auf:
einen ersten Schritt des Zugriffs auf computerbasierte Modelldaten zumindest eines Abschnitts des herzustellenden Objekts,
einen zweiten Schritt des Festlegens eines ersten Teilbereichs und eines zweiten Teilbereichs innerhalb des zumindest einen Objektabschnitts, die an einer Grenze aneinander grenzen,
einen dritten Schritt des Erzeugens zumindest eines Datenmodells eines zur Herstellung des zumindest einen Objektabschnitts selektiv zu verfestigenden Bereichs einer Aufbaumaterialschicht, in welchem ein erster Teilbereichs-Querschnitt den ersten Teilbereich schneidet und ein zweiter Teilbereichs-Querschnitt den zweiten Teilbereich schneidet, wobei in dem Datenmodell spezifiziert wird, dass im ersten Teilbereichs-Querschnitt zumindest ein Energieeintragsparameter im Mittel einen anderen Wert aufweist als im zweiten Teilbereichs-Querschnitt und während des Eintragens von Energie in das Aufbaumaterial durch das zumindest eine Energiestrahlbündel das zumindest eine Energiestrahlbündel mehrmals über die Grenze verfahren wird
   und
einen vierten Schritt, in dem Steuerdaten entsprechend dem im dritten Schritt erzeugten zumindest einen Datenmodell für die Generierung eines Steuerdatensatzes für die additive Herstellvorrichtung bereitgestellt werden,
wobei im dritten Schritt Datenmodelle von n+1 aufeinanderfolgenden Aufbaumaterialschichten erzeugt werden, wobei n eine natürliche Zahl ist, wobei in den Datenmodellen von n aufeinanderfolgenden Aufbaumaterialschichten eine Abtastung des Aufbaumaterials mit dem zumindest einen Energiestrahlbündel nur im ersten Teilbereichs-Querschnitt, nicht jedoch im zweiten Teilbereichs-Querschnitt spezifiziert ist und in dem Datenmodell der darauffolgenden n+1 - ten Aufbaumaterialschicht eine Abtastung des Aufbaumaterials im ersten Teilbereichs-Querschnitt und im zweiten Teilbereichs-Querschnitt spezifiziert ist,
wobei im dritten Schritt der Wert zumindest eines Energieeintragsparameter innerhalb einer Grenzregion verändert wird, welche eine Region in der durch das Datenmodell beschriebenen Aufbaumaterialschicht auf zumindest einer Seite der Grenze ist, in welcher die zu verfestigenden Stellen einen maximalen Abstand von 2000 µm, bevorzugter 1500 µm, noch bevorzugter 1000 µm, noch weiter bevorzugt 100 µm, am Bevorzugtesten 50 µm zur Grenze aufweisen.

Bei solch einem Vorgehen ist erst in der n+1 - ten Schicht eine Verfestigung in beiden Teilbereichs-Querschnitten mit zumindest einem im Mittel unterschiedlichen Energieeintragsparameter spezifiziert. Bei der Verfestigung des zweiten Teilbereichs-Querschnitts in der n+1 - ten Schicht werden dann die Energieeintragsparameter so gewählt, dass bei der Abtastung der n+1 - ten Schicht im zweiten Teilbereichs-Querschnitt das Aufbaumaterial in den n vorangegangenen Schichten im zweiten Teilbereichs-Querschnitt mit verfestigt wird. Dadurch müssen aber im zweiten Teilbereichs-Querschnitt andere Energieeintragsparameter gewählt werden als im ersten Teilbereichs-Querschnitt. Durch das Verfahren des Energiestrahlbündels über die Grenze während des Eintragens von Energie (also in einem Zug) kann aber dennoch für eine homogene Verfestigung an der Grenze zwischen beiden Teilbereichen gesorgt werden.

Durch das Vorgehen können im ersten Teilbereich Strukturen mit höherer Auflösung realisiert werden als im zweiten Teilbereich. Wenn beispielsweise der erste Teilbereich schwierig nachzubearbeitende Oberflächenbereiche des herzustellenden Objekts aufweist, so können diese mit höherer Präzision gebaut werden als das Innere des Objekts, bei dem es nicht auf eine gute Detailauflösung ankommt. Das Innere des Objekts kann beispielsweise durch Verfestigen mehrerer Schichten auf einmal mit hoher Energiedichte und/oder hoher Geschwindigkeit und/oder großem Durchmesser des Auftreffbereichs der Strahlung auf die Schicht erfolgen.

Wenn ein Energiestrahlbündel in einem Zug die Grenze zwischen dem ersten und zweiten Teilbereich(s-Querschnitt) überfährt, so muss irgendwann der Wert eines Energieeintragsparameters abgeändert werden, da ja im zweiten Teilbereich(s-Querschnitt) der Wert zumindest eines Energieeintragsparameters im Mittel anders ist als im ersten Teilbereich(s-Querschnitt). Bevorzugt geschieht diese Abänderung zumindest eines Energieeintragsparameterwertes in einer Grenzregion nahe der Grenze. Die Ausdehnung der Grenzregion, innerhalb derer zweckmäßigerweise der Parameter verändert wird, hängt dabei u. a. von der Systemträgheit der im Einzelfall verwendeten Energieeintragseinrichtung ab. Für eine große Verfahrgeschwindigkeit des Energiestrahlbündels wird man beispielsweise in der Regel eine größere Ausdehnung der Grenzregion senkrecht zur Grenze wählen. Da die Grenze zwischen dem ersten Teilbereichs-Querschnitt und dem zweiten Teilbereichs-Querschnitt in der Draufsicht nicht notwendigerweise eine gerade Linie sein muss, wird man den räumlichen Abstand bzw. maximalen räumlichen Abstand zur Grenze zweckmäßigerweise entlang eines Lotes von einer zu verfestigenden Stelle auf die Grenze bestimmen. Wenn die Grenzregion so gewählt wird, dass sie senkrecht zur Grenze eine verhältnismäßig große Ausdehnung aufweist, dann kann die Abänderung von Energieeintragsparameterwerten an unterschiedlichen Stellen innerhalb der Grenzregion (also mit wechselndem Abstand zur Grenze) erfolgen. Dadurch entsteht eine Vermischung von Bereichen, die mit unterschiedlichen Energieeintragsparameterwerten verfestigt wurden. Der Vorteil hiervon ist, dass die Energieeintragsparameterwerte nicht an einer exakten Grenzlinie abgeändert werden, welche eventuell nach Fertigstellung des Objekts sich als Schwachstelle (vorgegebene Bruchlinie) erweisen könnte.

Additive Herstellvorrichtungen und -verfahren, auf die sich die vorliegende Erfindung bezieht, sind insbesondere solche, bei denen Energie als elektromagnetische Strahlung oder Teilchenstrahlung selektiv einer Schicht des Aufbaumaterials zugeführt wird. Die Arbeitsebene ist dabei eine Ebene, in der die Oberseite der Schicht liegt, welcher die Energie zugeführt wird. Hierbei kann die Energieeintragseinrichtung beispielsweise einen Laser oder eine Elektronenstrahlquelle aufweisen, denkbar wäre aber auch eine UV-Lichtquelle, wie sie insbesondere in der Stereolithographie verwendet wird. Während in der Stereolithographie eine Verfestigung des Aufbaumaterials bewirkt wird, indem die auf das Aufbaumaterial einwirkende Strahlung in diesem eine Vernetzungsreaktion hervorruft, wird bei anderen Verfahren, insbesondere beim Lasersintern oder Laserschmelzen bzw. Elektronenstrahlschmelzen dem Aufbaumaterial Wärme zugeführt. Dabei wird das Aufbaumaterial mittels der durch die Strahlung eingebrachten Energie teilweise oder vollständig aufgeschmolzen, wodurch sich die Bestandteile des Aufbaumaterials (beispielsweise Pulverkörner) miteinander verbinden. Nach seiner Abkühlung liegt das Aufbaumaterial dann als Festkörper vor. Da die Übergänge zwischen oberflächlichem Aufschmelzen (Sintern) und vollständigem Aufschmelzen (Schmelzen) fließend sind, werden die Begriffe Sintern und Schmelzen in der vorliegenden Anmeldung synonym verwendet und nicht zwischen Sintern und Schmelzen unterschieden.

Wenn in dieser Anmeldung von unterhalb oder oberhalb eines Objektquerschnitts vorhandenen Schichten die Rede ist, dann bezieht sich diese Richtungsangabe auf eine Richtung, die im Wesentlichen senkrecht auf den Schichtebenen steht bzw. senkrecht zur Bauebene liegt. Der Begriff "im Wesentlichen" bringt hier zum Ausdruck, dass die Schichtdicke in manchen Fällen nicht einheitlich sein kann, z. B. die Schichtdicke sich über den Objektquerschnitt hinweg monoton ändern kann. Es wird in diesem Zusammenhang angenommen, dass untenliegende Schichten zeitlich vor den darüberliegenden Schichten aufgetragen werden und daher unterhalb der darüberliegenden Schichten angeordnet sind.

Es sei an dieser Stelle auch bemerkt, dass mittels einer erfindungsgemäßen additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines herzustellenden Objektes entsprechen, mit Energiestrahlung abzutasten, um das Aufbaumaterial zu verfestigen.

Im Detail basiert ein Steuerdatensatz auf einem computerbasierten Modell des oder der herzustellenden Objekte, bevorzugt einem CAD-Modell. Der Steuerdatensatz legt für jede Aufbaumaterialschicht während der Herstellung insbesondere die Dicke des Schichtauftrags und die Stellen, an denen durch Strahlungszufuhr eine Verfestigung des Aufbaumaterials bewirkt werden soll, fest. Des Weiteren enthält ein Steuerdatensatz oftmals auch herstellungsspezifische Informationen, beispielsweise bezüglich der Lage und Orientierung der Objekte in der additiven Herstellvorrichtung oder bezüglich eines Durchmessers des Energiestrahl(bündel)s beim Auftreffen auf das Aufbaumaterial. In der Regel enthält der Steuerdatensatz alle zur Steuerung der Energieeintragsvorrichtung erforderlichen Daten, wodurch u.a. die Energiedichte der Energiestrahlung oder die Verfahrgeschwindigkeit des Strahlbündels über das Aufbaumaterial und/oder ein Bestrahlungsmuster festgelegt werden.

Der Steuerdatensatz kann somit als Gesamtheit aller für die Steuerung des Herstellungsvorgangs in einer additiven Herstellvorrichtung vorgegebenen Steuerdaten angesehen werden. Die auf eine einzelne Schicht bezogenen Steuerdaten werden dabei im Folgenden auch als Schichtdatensatz bezeichnet. In der vorliegenden Anmeldung wird insbesondere angenommen, dass ein Schichtdatensatz ein Datenmodell von während des Herstellungsverfahrens zu verfestigenden Stellen eines Objektquerschnitts enthält. Solch ein Datenmodell wird in der Regel durch Zerlegen eines CAD-Modells des herzustellenden Objekts in Schichten (im Fachjargon als Slicing bezeichnet) erzeugt. Es ist aber auch denkbar, eine zweidimensionale Repräsentation des in einer Schicht mittels eines oder mehrerer Strahlenbündel zu verfestigenden Objektquerschnitts auf anderweitige Weise aus dem computerbasierten CAD-Modell des Objekts zu extrahieren. In dem Schichtdatensatz sind einem Objektquerschnitt entsprechende Stellen, die in der zugehörigen Aufbaumaterialschicht zu verfestigen sind, spezifiziert. Darüber hinaus können noch weitere Informationen hinsichtlich der Herstellung des Objektquerschnitts enthalten sein, insbesondere die zeitliche Reihenfolge, in der einem Objektquerschnitt entsprechende Stellen zu verfestigen sind, also eine Scanlinie bzw. eine Abtastspur entlang der verfestigt werden soll, oder z. B. die Schichtdicke oder Bestrahlungsparameterwerte wie beispielsweise der Durchmesser oder die Verfahrgeschwindigkeit eines auf das Aufbaumaterial auftreffenden Strahlbündels, etc. Es sei betont, dass es auch Sonderfälle gibt, in denen sich ein Schichtdatensatz nicht auf einen kompletten Objektquerschnitt bezieht, sondern nur auf einen Teil desselben.

Bei den computerbasierten Modelldaten kann es sich beispielsweise um ein CAD-Modell des herzustellenden Objektabschnitts, das z. B. im STL-Format vorliegt und noch keine Informationen über die Zerlegung in Schichten für eine schichtweise Herstellung enthält, oder aber um eine Anzahl von Schichtdatensätzen handeln. An dieser Stelle sei vermerkt, dass in der vorliegenden Anmeldung der Begriff "Anzahl" stets im Sinne von "ein oder mehrere" zu verstehen ist. Ferner sei bemerkt, dass der Objektabschnitt sich nicht notwendigerweise auf einen Teil des herzustellenden Objekts beziehen muss, sondern auch das ganze herzustellende Objekt umfassen kann.

Ein Zugriff auf die Modelldaten kann so aussehen, dass die Modelldaten aus einem Speicher ausgelesen werden oder aber über ein Netzwerk entgegengenommen werden. Dabei müssen die Modelldaten des gesamten Objektabschnitts nicht zwangsläufig auf einmal eingelesen werden. Es ist auch möglich, dass es einen größeren zeitlichen Abstand zwischen den Zugriffsvorgängen auf Teile der Modelldaten gibt, beispielsweise Teile der Modelldaten jeweils bei Bedarf während eines Herstellungsvorgangs des Objektabschnitts eingelesen werden und ein erzeugtes Datenmodell dann während des Herstellungsvorgangs in den Steuerdatensatz integriert wird.

Wenn in den Modelldaten des Objektabschnitts bereits Energieeintragsparameterwerte spezifiziert sind, dann werden im zweiten Schritt der erste und zweite Teilbereich bevorzugt so festgelegt, dass im ersten Teilbereich zumindest ein Energieeintragsparameter im Mittel einen anderen Wert aufweist als im zweiten Teilbereich. Bevorzugt erstreckt sich jeder Teilbereich über eine Mehrzahl von während seiner Herstellung aufzubringenden Aufbaumaterialschichten.

Sofern bereits in den Modelldaten spezifizierte Energieeintragsparameter innerhalb des Objektabschnitts eine Vielzahl von Werten einnehmen bzw. stark schwanken, also insbesondere sich kleinräumig ändern, wird im zweiten Schritt bevorzugt nicht eine beliebige Vielzahl an Teilbereichen festgelegt, sondern lediglich eine begrenzte Anzahl an Teilbereichen, die sich darin unterscheiden, dass der Wert zumindest eines Energieeintragsparameters zumindest im Mittel unterschiedlich ist. In der Praxis kann beispielsweise ein Teilbereich dadurch definiert sein, dass die Energieeintragsparameterwerte innerhalb desselben ein vorgegebenes Schwankungsmaß nicht überschreiten.

Wenn die Modelldaten des Objektabschnitts bereits eine Anzahl von Schichtdatensätzen aufweisen, dann kann die Erzeugung zumindest eines Datenmodells im dritten Schritt in der Abänderung eines bereits in den Modelldaten vorhandenen Datenmodells einer Aufbaumaterialschicht bestehen. Andernfalls kann ein Datenmodell einer Aufbaumaterialschicht erstmalig im dritten Schritt erzeugt werden, wobei dann im ersten Teilbereichs-Querschnitt für zumindest einen Energieeintragsparameter im Mittel ein anderer Wert spezifiziert ist als im zweiten Teilbereichs-Querschnitt.

Ferner sei betont, dass im dritten Schritt ein Datenmodell einer Aufbaumaterialschicht erzeugt wird, in der die Grenze zwischen dem ersten und zweiten Teilbereich zumindest teilweise im Innern des Objektabschnitts liegt. Mit anderen Worten wird ein Datenmodell einer Aufbaumaterialschicht erzeugt, in der die Grenze zwischen dem ersten und zweiten Teilbereich während des Bauvorgangs zumindest teilweise nicht oberhalb von unverfestigtem Aufbaumaterial liegt und nicht von unverfestigtem Aufbaumaterial bedeckt ist. Mit anderen Worten wird im dritten Schritt ein Datenmodell einer Aufbaumaterialschicht erzeugt, in der die Grenze zwischen dem ersten und zweiten Teilbereich zumindest teilweise, bevorzugt vollständig, oberhalb von zu verfestigenden Stellen in der darunterliegenden Schicht und unterhalb von zu verfestigenden Stellen in der darunterliegenden Schicht verläuft. Dies wird dadurch erreicht, dass der erste Teilbereichs-Querschnitt den ersten Teilbereich schneidet und der zweite Teilbereichs-Querschnitt den zweiten Teilbereich schneidet. Der Begriff "schneiden" bringt hier zum Ausdruck, dass in dem erzeugten Datenmodell weder der erste Teilbereichs-Querschnitt noch der zweite Teilbereichs-Querschnitt mit einer Bodenfläche oder Deckfläche des ersten Teilbereichs bzw. zweiten Teilbereichs übereinstimmen. Durch diese Spezifikation liegt automatisch die Grenze zwischen dem ersten und zweiten Teilbereich zumindest teilweise im Innern des Objektabschnitts.

In einem im dritten Schritt erzeugten Datenmodell wird nicht spezifiziert, dass jeder Teilbereichs-Querschnitt zunächst vollständig mit einem Energiestrahlbündel abgetastet wird, bevor ein angrenzender Teilbereichs-Querschnitt mit dem Energiestrahlbündel abgetastet wird. Vielmehr wird spezifiziert, dass ein Energiestrahlbündel im Wesentlichen kontinuierlich, d.h. ohne abzusetzen, über die Grenze zwischen dem ersten und zweiten Teilbereich bzw. ersten und zweiten Teilbereichs-Querschnitt bewegt wird. Das Energiestrahlbündel tastet also zunächst Stellen im ersten Teilbereichs-Querschnitt ab und überquert während der Abtastung des Aufbaumaterials, d.h. im Wesentlichen ohne Unterbrechung der Energiezufuhr zum Aufbaumaterial, die Grenze zum zweiten Teilbereichs-Querschnitt, um dann in dem zweiten Teilbereichs-Querschnitt Stellen basierend auf einem geänderten Wert zumindest eines Energieeintragsparameters abzutasten.

Sofern das Energiestrahlbündel einen flächigen Auftreffbereich auf dem Aufbaumaterial bzw. der Arbeitsebene aufweist, also nicht im Wesentlichen punktförmig auftrifft, ist mit einem Verfahren des Energiestrahlbündels über die Grenze insbesondere gemeint, dass der Auftreffbereich des Energiestrahlbündels auf dem Aufbaumaterial die Grenze vollständig überschreitet. Bevorzugt wird also das Energiestrahlbündel so weit in den anderen Teilbereich(s-Querschnitt) hinein bewegt, dass das Aufbaumaterial in dem anderen Teilbereich(s-Querschnitt) nicht nur nahe der Grenze abgetastet wird. Mit anderen Worten werden der erste Teilbereichs-Querschnitt und der zweite Teilbereichs-Querschnitt mit dem Energiestrahlbündel in einem Zuge, also im Wesentlichen ohne zeitliche Unterbrechung der Bewegung an der Grenze, abgetastet. Eine Scanlinie, also die Abtaststrecke auf dem Aufbaumaterial bzw. in der Arbeitsebene, in dem zweiten Teilbereichs-Querschnitt wird also zeitlich unmittelbar nach einer Scanlinie in dem ersten Teilbereichs-Querschnitt durchlaufen. Bevorzugt werden der gesamte erste und zweite Teilbereichs-Querschnitt auf diese Weise abgetastet.

Es sei bemerkt, dass die für die Generierung eines Steuerdatensatzes bereitgestellten Steuerdaten zum Einen aus dem im dritten Schritt erzeugten zumindest einen Datenmodell selbst bestehen können, zum Anderen das zumindest eine Datenmodell aber auch entsprechend den Formatanforderungen durch den Steuerbefehlssatz noch aufbereitet werden können.

Durch das erfindungsgemäße Vorgehen kann trotz unterschiedlicher Werte eines Energieeintragsparameters in zwei aneinandergrenzenden Teilbereichen die Energie möglichst homogen in das Aufbaumaterial eingetragen werden. Dadurch ist es möglich, in unterschiedlichen Teilbereichen eines Objektquerschnitts, in denen Energie mit unterschiedlichen Werten zumindest eines Energieeintragsparameters eingetragen wird, abrupte Änderungen von Eigenschaftsparametern im fertiggestellten Objekt an der Grenze zwischen den Teilbereichen zu vermeiden. Durch die durch solch ein Vorgehen bedingte homogenere Verfestigung kann insbesondere für sanfte Änderungen von Eigenschaftsparametern des Objekts gesorgt werden. Die vorliegende Anmeldung versteht dabei unter einer größeren Homogenität des hergestellten Objekts an einem Übergang innerhalb desselben insbesondere geringere Sprünge in einer Eigenschaft des Objekts an diesem Übergang. Durch das beschriebene Vorgehen können Sprünge in mechanischen Parametern wie z. B. der Reißdehnung, verringert bzw. vermieden werden und dadurch z. B. für eine größere Festigkeit der hergestellten Objekte gesorgt werden. Beispielsweise kann eine gleichmäßigere Qualität eines Kristallgefüges eines in einem metallbasierten additiven Herstellverfahren erzeugten Objekts erzielt werden. Natürlich ist das erfindungsgemäße Vorgehen dabei nicht nur auf zwei aneinandergrenzende Teilbereiche mit unterschiedlichen Energieeintragsparameterwerten beschränkt, sondern auf alle in einem Objekt aneinandergrenzenden Teilbereiche mit jeweils unterschiedlichen Energieeintragsparameterwerten anwendbar.

In der Praxis kann es bei der Bewegung eines Energiestrahlbündels, insbesondere eines Laser- oder Elektronenstrahls, zu kleinen Störungen kommen, die auf verzögerte Reaktionen der Mechanik oder Elektronik der Energieeintragseinrichtung zurückzuführen sind. Diese Effekte können auch bei dem erfindungsgemäßen Vorgehen hingenommen werden. Auf jeden Fall strebt das soeben beschriebene Verfahren an, ein Energiestrahlbündel möglichst kontinuierlich über die Grenze zwischen zwei Teilbereichen zu bewegen. Kurzzeitige Unterbrechungen des Energiestrahls, z. B. beim Abändern eines Energieeintragsparameters, müssen dabei hingenommen werden, sind aber erfindungsgemäß nicht beabsichtigt. Sofern solche Unterbrechungen unterhalb von einer oder mehreren Mikrosekunden liegen, bevorzugt unterhalb von zehn Mikrosekunden liegen, sind sie im Rahmen der Erfindung tolerierbar. Selbst Unterbrechungen von einigen zehn Mikrosekunden sind in einigen Fällen noch hinnehmbar.

Bei einer Variante des Vorgehens wird im ersten Schritt auf Modelldaten zugegriffen wird, die eine Anzahl von Schichtdatensätzen aufweisen, von denen jeder Schichtdatensatz ein Datenmodell eines während der Herstellung selektiv zu verfestigenden Bereichs einer Aufbaumaterialschicht aufweist, der einem Querschnitt des Objektabschnitts entspricht.

Bei dieser bereits erwähnten Variante des Vorgehens vereinfacht sich das Verfahren, da auf bereits vorhandene Schichtdatensätze zurückgegriffen werden kann, die lediglich abgeändert werden. Insbesondere wenn in den Schichtdatensätzen bereits Energieeintragsparameterwerte spezifiziert sind, können im zweiten Schritt der erste und zweite Teilbereich bevorzugt so festgelegt werden, dass im ersten Teilbereich zumindest ein Energieeintragsparameter im Mittel einen anderen Wert aufweist als im zweiten Teilbereich.

Wenn ein Energiestrahlbündel in einem Zug die Grenze zwischen dem ersten und zweiten Teilbereich(s-Querschnitt) überfährt, so muss irgendwann der Wert eines Energieeintragsparameters abgeändert werden, da ja im zweiten Teilbereich(s-Querschnitt) der Wert zumindest eines Energieeintragsparameters im Mittel anders ist als im ersten Teilbereich(s-Querschnitt). Bevorzugt geschieht diese Abänderung zumindest eines Energieeintragsparameterwertes in einer Grenzregion nahe der Grenze. Die Ausdehnung der Grenzregion, innerhalb derer zweckmäßigerweise der Parameter verändert wird, hängt dabei u. a. von der Systemträgheit der im Einzelfall verwendeten Energieeintragseinrichtung ab. Für eine große Verfahrgeschwindigkeit des Energiestrahlbündels wird man beispielsweise in der Regel eine größere Ausdehnung der Grenzregion senkrecht zur Grenze wählen. Da die Grenze zwischen dem ersten Teilbereichs-Querschnitt und dem zweiten Teilbereichs-Querschnitt in der Draufsicht nicht notwendigerweise eine gerade Linie sein muss, wird man den räumlichen Abstand bzw. maximalen räumlichen Abstand zur Grenze zweckmäßigerweise entlang eines Lotes von einer zu verfestigenden Stelle auf die Grenze bestimmen. Wenn die Grenzregion so gewählt wird, dass sie senkrecht zur Grenze eine verhältnismäßig große Ausdehnung aufweist, dann kann die Abänderung von Energieeintragsparameterwerten an unterschiedlichen Stellen innerhalb der Grenzregion (also mit wechselndem Abstand zur Grenze) erfolgen. Dadurch entsteht eine Vermischung von Bereichen, die mit unterschiedlichen Energieeintragsparameterwerten verfestigt wurden.

Der Vorteil hiervon ist, dass die Energieeintragsparameterwerte nicht an einer exakten Grenzlinie abgeändert werden, welche eventuell nach Fertigstellung des Objekts sich als Schwachstelle (vorgegebene Bruchlinie) erweisen könnte.

Weiter bevorzugt wird der Wert zumindest eines Energieeintragsparameters unmittelbar beim Überfahren der Grenze abgeändert.

Wenn in unterschiedlichen Teilbereichen des herzustellenden Objekts unterschiedliche Werte von Energieeintragsparametern spezifiziert sind, so bietet es sich an, Energieeintragsparameterwerte unmittelbar an der Grenze zwischen Teilbereichen abzuändern, obwohl ein Energiestrahlbündel ohne Unterbrechung über die Grenze verfahren wird. Wie schnell dabei der Energieeintragsparameter tatsächlich abgeändert werden kann, hängt von den apparativen Gegebenheiten ab. Dabei wird in den Steuerdaten eine Änderung an der Grenze zwischen zwei Teilbereichen angestrebt. Gegebenenfalls werden apparative Verzögerungen dadurch berücksichtigt, dass ein geänderter Wert eines Energieeintragsparameters für das Energiestrahlbündel bereits spezifiziert wird, wenn das Energiestrahlbündel noch nicht die Grenze erreicht hat. Durch eventuell vorhandene apparative Verzögerungen erfolgt dann eine Änderung des Energieeintragsparameters möglichst nahe an der Grenze, also beim Verfahren des Energiestrahlbündels über die Grenze (beim Überfahren der Grenze). Selbst wenn der Auftreffbereich eines Energiestrahlbündels auf das Aufbaumaterial nicht punktförmig ist, sondern eine Ausdehnung in der Fläche hat, kann eine Abänderung eines Wertes eines Energieeintragsparameters beim Überfahren der Grenze so festgelegt werden, dass während der Bewegung des Auftreffbereichs über die Grenze der Wert des Energieeintragsparameters abgeändert wird. In jedem Fall bezieht sich das Verfahren auf die Spezifizierung der Steuerdaten für die Energieeintragseinrichtung, also insbesondere auf die Ortsangaben bzw. Koordinatenangaben, die der Energieeintragseinrichtung durch die Steuerdaten vorgegeben werden.

Alternativ zum soeben beschriebenen Vorgehen kann der Wert zumindest eines Energieeintragsparameters innerhalb der Grenzregion allmählich abgeändert werden.

Auch wenn es natürlich wünschenswert ist, dass in den Teilbereichen mit unterschiedlichen Werten eines Energieeintragsparameters an allen Stellen der exakte Wert dieses Energieeintragsparameters spezifiziert wird, so kann es in der Praxis einfacher sein, wenn der Wert eines Energieeintragsparameters innerhalb einer Grenzregion nicht abrupt, sondern allmählich geändert wird. Dies kann einerseits bedeuten, dass der Wert eines Energieeintragsparameters in mehreren Stufen vom Wert innerhalb des ersten Teilbereichs(s-Querschnitts) zum Wert innerhalb des zweiten Teilbereichs(-Querschnitts) hin abgeändert wird oder aber im Wesentlichen kontinuierlich vom Wert innerhalb des ersten Teilbereichs(-Querschnitts) zum Wert innerhalb des zweiten Teilbereichs(-Querschnitts) hin abgeändert wird.

Hier wird von einer "im Wesentlichen kontinuierlichen" Abänderung gesprochen, da in der Praxis eine kontinuierliche Abänderung (die unendlich viele Stufen impliziert) nicht möglich ist. In der Praxis existiert stets eine maximale Geschwindigkeit, mit der der Wert eines Energieeintragsparameters geändert werden kann. Da hier der Wert eines Energieeintragsparameters im Wesentlichen während der Bewegung des Energiestrahlbündels abgeändert wird, bewegt sich während der Abänderung des Energieeintragsparameterwertes der Auftreffbereich des Energiestrahlbündels bereits ein Stück weiter. In der Praxis wird daher auch bei einer beabsichtigten kontinuierlichen Veränderung des Wertes eines Energieeintragsparameters stets der Energieeintrag sich in Stufen ändern. Es sei nebenbei bemerkt, dass die Steuerdaten auch nicht unterschiedliche Werte eines Energieeintragsparameters mit einer beliebig feinen Granularität spezifizieren können. In der Praxis werden stets diskrete Wertvorgaben vorhanden sein.

Weiter bevorzugt tastet das zumindest eine Energiestrahlbündel das Aufbaumaterial im ersten Teilbereichs-Querschnitt entlang von ersten Scanlinien ab und das Aufbaumaterial im zweiten Teilbereichs-Querschnitt entlang von zweiten Scanlinien ab, wobei erste Scanlinien innerhalb des ersten Teilbereichs-Querschnitts in der Grenzregion, insbesondere an der Grenze, in der gleichen Richtung verlaufen wie zweite Scanlinien innerhalb des zweiten Teilbereichs-Querschnitts.

Die Stellen innerhalb eines Objektquerschnitts werden normalerweise so verfestigt, dass zumindest ein Energiestrahlbündel in im Wesentlichen zueinander parallelen, bevorzugt zueinander parallelen, Abtastlinien (Scanlinien) über das Aufbaumaterial bewegt wird. Die Scanlinien haben dabei einen Abstand zueinander, der so bemessen ist, dass das Aufbaumaterial in dem mittels der Scanlinien abgetasteten Bereich möglichst homogen verfestigt wird. Dabei wird ein Abstand zwischen zwei benachbarten Scanlinien beispielsweise als Abstand zwischen den Linienmitten in einer Richtung senkrecht zum Linienverlauf definiert. Damit an der Grenze zwischen den beiden Teilbereichen möglichst keine Sprünge in den Materialeigenschaften bzw. mechanischen Parametern des verfestigten Objekts auftreten, wird bei dem soeben beschriebenen Vorgehen die Richtung, in der die Scanlinien verlaufen, an der Grenze bzw. in der Grenzregion beibehalten, also nicht verändert. Bevorzugt gilt das natürlich nicht nur für eine Scanlinie, sondern für alle Scanlinien, die die Grenze schneiden. Mit Richtung ist im Rahmen dieser Anmeldung die Lage innerhalb der Ebene des Querschnitts des Objekts gemeint und nicht die Bewegungsrichtung des Energiestrahlbündels auf einer Scanlinie. Es sei hier bemerkt, dass aus Gründen der besseren Unterscheidung jene Scanlinien, die sich im ersten Teilbereichs-Querschnitt befinden, als erste Scanlinien bezeichnet werden und jene Scanlinien, die sich im zweiten Teilbereichs-Querschnitt befinden, als zweite Scanlinien bezeichnet werden, unabhängig von Änderungen der Richtung der Scanlinien oder Änderungen eines Energieeintragsparameters während der Bewegung des Auftreffbereichs des Energiestrahlbündels auf der Scanlinie, also entlang der vorgegebenen Abtaststrecke.

Alternativ tastet das zumindest eine Energiestrahlbündel das Aufbaumaterial im ersten Teilbereichs-Querschnitt entlang von ersten Scanlinien abtastet und das Aufbaumaterial im zweiten Teilbereichs-Querschnitt entlang von zweiten Scanlinien abtastet, wobei die ersten Scanlinien und die zweiten Scanlinien n der Grenzregion, insbesondere an der Grenze, einen von 0° verschiedenen Winkel zueinander aufweisen.

Beim Abtasten von Bereichen eines Objektquerschnitts entlang von Scanlinien wird in der Praxis manchmal nicht an allen Stellen entlang einer Scanlinie der gleiche Energiebetrag pro Flächeneinheit eingetragen. Vielmehr hängt die Größe des eingetragenen Energiebetrags pro Flächeneinheit auch von der Gestalt des jeweiligen Teilbereichs ab. Hierbei kann es auch bevorzugte Richtungen der Scanlinien in Abhängigkeit von der Gestalt eines Bereichs geben.

Insbesondere können die ersten Scanlinien und zweiten Scanlinien in der Grenzregion, insbesondere an der Grenze einen Winkel zueinander aufweisen, der kleiner als 30° ist, bevorzugt kleiner als 10°, noch bevorzugter kleiner als 1° ist.

Im Hinblick auf eine möglichst große Homogenität an den Grenzen zwischen Teilbereichen gibt es bevorzugt einen Maximalwinkel zwischen den Richtungen der ersten Scanlinien im ersten Teilbereich-Querschnitt und der zweiten Scanlinien im zweiten Teilbereichs-Querschnitt.

Insbesondere können sich die Verlaufsrichtungen der ersten Scanlinien und/oder der zweiten Scanlinien innerhalb der Grenzregion allmählich ändern.

Um eine möglichst homogene Verfestigung des Materials beim Übergang vom ersten Teilbereich in den zweiten Teilbereich zu erreichen, ist es von Vorteil, wenn die Richtung, in der ein Energiestrahlbündel beim Verfahren entlang einer ersten Scanlinie im ersten Teilbereichs-Querschnitt bewegt wird, sukzessive abgeändert wird, so dass das Energiestrahlbündel im zweiten Teilbereichs-Querschnitt entlang einer zweiten Scanlinie mit anderer Richtung bewegt wird. Mit anderen Worten ändert sich die Richtung, in der ein Energiestrahlbündel bewegt wird, sukzessive, wenn das Energiestrahlbündel vom ersten Teilbereichs-Querschnitt in den zweiten Teilbereichs-Querschnitt verfahren wird. Zum einen ist es denkbar, dass eine zweimalige, dreimalige oder mehrmalige Abänderung der Bewegungsrichtung des Energiestrahlbündels in der Grenzregion erfolgt. Es ist aber auch denkbar, dass die Richtung der Bewegung des Energiestrahlbündels sich nahezu kontinuierlich, d.h. in vielen Schritten und daher annähernd stufenlos, innerhalb der Grenzregion ändert. Damit ist es möglich, dass innerhalb des ersten Teilbereichsquerschnitts ein Energiestrahlbündel entlang von ersten Scanlinien bewegt wird, innerhalb des zweiten Teilbereichs-Querschnitts entlang von zweiten Scanlinien bewegt wird und beim Übergang vom ersten in den zweiten Teilbereichs-Querschnitt in der Grenzregion die Verlaufsrichtung der Scanlinien allmählich geändert wird. Indem eine abrupte Änderung der Bewegungsrichtung des Energiestrahlbündels vermieden wird, wird für eine homogenere Verfestigung des Aufbaumaterials innerhalb der Grenzregion gesorgt. Darüber hinaus kann solch ein Vorgehen auch einen Geschwindigkeitsgewinn bzw. Zeitgewinn bei der Verwendung von Energieeintragseinrichtungen bringen, bei denen infolge der mechanischen Trägheit der Strahlablenkungseinrichtung abrupte Richtungsänderungen nur mittels zeitaufwändigen Abbremsens und Beschleunigens möglich sind. Wiederum wird auf die beschriebene Art und Weise bevorzugt für alle ersten Scanlinien in dem ersten Teilbereichs-Querschnitt, welche die Grenze schneiden, so verfahren.

Insbesondere kann das zumindest eine Energiestrahlbündel das Aufbaumaterial im ersten Teilbereichs-Querschnitt entlang von ersten Scanlinien abtasten und das Aufbaumaterial im zweiten Teilbereichs-Querschnitt entlang von zweiten Scanlinien abtasten, wobei innerhalb der Grenzregion, insbesondere unmittelbar an der Grenze ein Versatz von ersten und/oder zweiten Scanlinien um einen Betrag stattfindet, der kleiner der Hälfte des Abstands zwischen den ersten Scanlinien oder zweiten Scanlinien ist.

Gerade wenn der Scanlinienabstand zwischen den ersten Scanlinien im ersten Teilbereichs-Querschnitt ein anderer ist als der Scanlinienabstand zwischen den zweiten Scanlinien im zweiten Teilbereichs-Querschnitt, kann der Fall auftreten, dass eine erste und eine zweite Scanlinie an der Grenze exakt aufeinandertreffen, jedoch die zu diesen jeweils benachbarten ersten und zweiten Scanlinien nicht an der Grenze aufeinandertreffen. Ebenso kann es für den Fall, dass die Scanlinienabstände im ersten Teilbereichs-Querschnitt und im zweiten Teilbereichs-Querschnitt gleich sind, jedoch die Richtungen der ersten Scanlinien im ersten Teilbereichs-Querschnitt anders sind als die Richtungen der zweiten Scanlinien im zweiten Teilbereichs-Querschnitt, passieren, dass nicht alle Scanlinienpaare aus erster Scanlinie und zweiter Scanlinie sich an der Grenze bzw. in der Grenzregion schneiden. Daraus resultiert dann an der Grenze bzw. innerhalb der Grenzregion ein Versatz von ersten und zweiten Scanlinien, womit der Abstand zwischen dem Schnittpunkt einer ersten Scanlinie mit der Grenze und dem Schnittpunkt einer zweiten Scanlinie mit der Grenze bzw. mit einem Rand der Grenzregion gemeint ist. Ein Schnittpunkt einer Scanlinie mit der Grenze ist beispielsweise der Punkt, an dem die Mitte der Scanlinie in einer Richtung senkrecht zum Linienverlauf der Scanlinie die Grenze schneidet. Für eine hinreichende Homogenität bei der Verfestigung des Aufbaumaterials ist es allerdings ausreichend, wenn solch ein Versatz von einer ersten Scanlinie gegenüber einer zweiten Scanlinie kleiner als die Hälfte des Abstands zwischen den ersten oder zweiten Scanlinien ist. Ein Scanlinienabstand ist hierbei definiert als der Abstand zwischen den Linienmitten zweier benachbarter Scanlinien in einer Richtung senkrecht zur Verlaufsrichtung der beiden Scanlinien. Obwohl es in manchen Fällen ausreichend sein kann, wenn nur lokal für eine hinreichende Homogenität bei der Verfestigung an der Grenze zwischen erstem Teilbereichs-Querschnitt und zweitem Teilbereichs-Querschnitt gesorgt ist, so ist es dennoch von Vorteil, wenn die genannte Bedingung für alle ersten und zweiten Scanlinien gilt, deren Verlaufsrichtungen einen Schnittpunkt mit der Grenze aufweisen.

Insbesondere kann das zumindest eine Energiestrahlbündel das Aufbaumaterial im ersten Teilbereichs-Querschnitt entlang von ersten Scanlinien abtasten und das Aufbaumaterial im zweiten Teilbereichs-Querschnitt entlang von zweiten Scanlinien abtasten, wobei der Abstand zwischen ersten Scanlinien im ersten Teilbereichs-Querschnitt gleich dem Abstand zwischen zweiten Scanlinien im zweiten Teilbereichs-Querschnitt ist.

Wiederum im Hinblick auf eine möglichst homogene Verfestigung wird für den zweiten Teilbereichs-Querschnitt die gleiche Scanliniendichte gewählt wie für den ersten Teilbereichs-Querschnitt. Wenn die ersten und zweiten Scanlinien zueinander parallel sind, ist dies auf einfache Weise realisierbar. In anderen Fällen kann beispielsweise durch die allmähliche Änderung der Scanlinienrichtungen in der Grenzregion für einen gleichen Scanlinienabstand im ersten Teilbereichs-Querschnitt und zweiten Teilbereichs-Querschnitt gesorgt werden.

Optional kann der Abstand zwischen ersten Scanlinien im ersten Teilbereichs-Querschnitt unterschiedlich zum Abstand zwischen zweiten Scanlinien im zweiten Teilbereichs-Querschnitt sein. Bevorzugt gilt dies für alle Scanlinien im ersten und zweiten Teilbereichs-Querschnitt, die die Grenze schneiden. Insbesondere kann im zweiten Teilbereichs-Querschnitt das Aufbaumaterial gezielt mit einem anderen Scanlinienabstand verfestigt werden. Dies kann beispielsweise dadurch motiviert sein, dass im zweiten Teilbereichs-Querschnitt andere Werte von Energieeintragsparametern gewünscht sind.

Bei einem erfindungsgemäßen additiven Herstellverfahren zur Herstellung eines dreidimensionalen Objekts, wobei das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen zum Eintragen von Energie in das Aufbaumaterial mit mindestens einem Energiestrahlbündel gemäß einem Satz von Energieeintragsparametern abgetastet werden,
wird der Ablauf des additiven Herstellverfahrens durch einen Steuerdatensatz gesteuert wird, der unter Verwendung eines erfindungsgemäßen Verfahrens zur Bereitstellung von Steuerdaten generiert wurde.

Wenn erfindungsgemäß bereitgestellte Steuerdaten in einem Steuerdatensatz verwendet werden, der für die Steuerung eines additiven Herstellverfahrens generiert wurde, insbesondere die Steuerung eines schichtweisen additiven Herstellverfahrens, wie beispielsweise eines schichtweisen Pulverschmelz- oder Sinterverfahrens, wie z.B. SLS oder DMLS, dann können Objekte mit möglichst homogenen Eigenschaften, d.h. ohne lokale Sprünge von Eigenschaftsparametern des Objekts, wie z.B. der Bruchdehnung, der Oberflächenrauheit, der Farbe, etc., hergestellt werden.

Eine erfindungsgemäße Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem eine Energieeintragseinrichtung diese Stellen zum Eintragen von Energie in das Aufbaumaterial mit mindestens einem Energiestrahlbündel gemäß einem Satz von Energieeintragsparametern abtastet, weist auf:
eine Datenzugriffseinheit, die ausgelegt ist zum Zugriff auf computerbasierte Modelldaten zumindest eines Abschnitts des herzustellenden Objekts,
eine Segmentierungseinheit, die ausgelegt ist, einen ersten Teilbereich und einen zweiten Teilbereich innerhalb des zumindest einen Objektabschnitts, die an einer Grenze aneinandergrenzen, festzulegen,
eine Datenmodell-Erzeugungseinheit, die ausgelegt ist, zumindest ein Datenmodell eines zur Herstellung des zumindest einen Objektabschnitts selektiv zu verfestigenden Bereichs einer Aufbaumaterialschicht, in welchem ein erster Teilbereichs-Querschnitt den ersten Teilbereich schneidet und ein zweiter Teilbereichs-Querschnitt den zweiten Teilbereich schneidet, zu erzeugen, wobei in dem Datenmodell spezifiziert ist, dass im ersten Teilbereichs-Querschnitt zumindest ein Energieeintragsparameter im Mittel einen anderen Wert aufweist als im zweiten Teilbereichs-Querschnitt und während des Eintragens von Energie in das Aufbaumaterial durch das zumindest eine Energiestrahlbündel das zumindest eine Energiestrahlbündel mehrmals über die Grenze verfahren wird,
   und
eine Steuerdaten-Bereitstellungseinheit, die ausgelegt ist, Steuerdaten entsprechend dem durch die Datenmodell-Erzeugungseinheit erzeugten zumindest einen Datenmodell für die Generierung eines Steuerdatensatzes für die additive Herstellvorrichtung bereit zu stellen
wobei im dritten Schritt Datenmodelle von n+1 aufeinanderfolgenden Aufbaumaterialschichten erzeugt werden, wobei n eine natürliche Zahl ist, wobei in den Datenmodellen von n aufeinanderfolgenden Aufbaumaterialschichten eine Abtastung des Aufbaumaterials mit dem zumindest einen Energiestrahlbündel nur im ersten Teilbereichs-Querschnitt, nicht jedoch im zweiten Teilbereichs-Querschnitt spezifiziert ist und in dem Datenmodell der darauffolgenden n+1 - ten Aufbaumaterialschicht eine Abtastung des Aufbaumaterials im ersten Teilbereichs-Querschnitt und im zweiten Teilbereichs-Querschnitt spezifiziert ist,
wobei im dritten Schritt der Wert zumindest eines Energieeintragsparameter innerhalb einer Grenzregion verändert wird, welche eine Region in der durch das Datenmodell beschriebenen Aufbaumaterialschicht auf zumindest einer Seite der Grenze ist, in welcher die zu verfestigenden Stellen einen maximalen Abstand von 2000 µm, bevorzugter 1500 µm, noch bevorzugter 1000 µm, noch weiter bevorzugt 100 µm, am Bevorzugtesten 50 µm zur Grenze aufweisen.

Die Bereitstellung des im dritten Schritt erzeugten Datenmodells für die Generierung eines Steuerdatensatzes kann durch die Steuerdaten-Bereitstellungseinheit selbst geschehen, indem diese das erzeugte Datenmodell in einen Steuerdatensatz für die additive Herstellvorrichtung integriert. Bereitstellen umfasst aber auch ein Weiterleiten des Datenmodells an eine Datenverarbeitungsvorrichtung, welche das Datenmodell in einen Steuerdatensatz integriert, oder ein direktes Weiterleiten an eine additive Herstellvorrichtung. Insbesondere ist es möglich, während eines Herstellvorgangs in der additiven Herstellvorrichtung dieser dynamisch Datenmodelle für noch herzustellende Objektquerschnitte zur Verfügung zu stellen. Insbesondere müssen im dritten Schritt erzeugte Datenmodelle nicht einzeln für einen additiven Herstellvorgang bereitgestellt werden. Vielmehr können auch mehrere erzeugte Datenmodelle zunächst gesammelt und anschließend in ihrer Gesamtheit zur Integration in einen Steuerdatensatz bereitgestellt werden.

Ein erfindungsgemäßes Computerprogramm, weist Programmcodemittel auf, um alle Schritte eines Verfahrens gemäß einem erfindungsgemäßen Verfahren zur Bereitstellung von Steuerdaten auszuführen, wenn das Computerprogramm mittels eines Datenprozessors, insbesondere eines mit einer additiven Herstellvorrichtung zusammenwirkenden Datenprozessors, ausgeführt wird.

"Zusammenwirken" heißt hierbei, dass der Datenprozessor entweder in die additive Herstellvorrichtung integriert ist oder mit ihr Daten austauschen kann. Die Implementierung des erfindungsgemäßen Verfahrens zur Bereitstellung von Steuerdaten sowie der zugehörigen Vorrichtung mittels Software ermöglicht eine einfache Installierbarkeit auf verschiedenen EDV-Systemen an verschiedenen Orten (beispielsweise beim Ersteller des Designs des Objekts oder aber beim Betreiber der additiven Herstellvorrichtung).

Eine erfindungsgemäße additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen zum Eintragen von Energie in das Aufbaumaterial mit mindestens einem Energiestrahlbündel gemäß einem Satz von Energieeintragsparametern abgetastet werden, weist auf:
eine Schichtaufbringvorrichtung, die geeignet ist, eine Schicht eines Aufbaumaterials auf eine bereits vorhandene, bevorzugt bereits selektiv verfestigte, Aufbaumaterialschicht aufzubringen,
eine Energieeintragsvorrichtung, die geeignet ist, die dem Querschnitt des Objekts in einer Schicht zugeordneten Stellen mit mindestens einem Energiestrahlbündel abzutasten, und
eine Steuereinheit, die so eingerichtet ist, dass sie zur Steuerung der Herstellung des Objekts ein erfindungsgemäßes Computerprogramm ausführt.

Weitere Merkmale und Zweckmäßigkeiten der Erfindung ergeben sich aus der Beschreibung von Ausführungsbeispielen anhand der beigefügten Figuren.
Fig. 1 zeigt eine schematische, teilweise im Schnitt dargestellte Ansicht einer beispielhaften Vorrichtung zum generativen Herstellen eines dreidimensionalen Objekts gemäß einer Ausführungsform der Erfindung,
Fig. 2 zeigt schematisch eine beispielhafte Zerlegung eines herzustellenden Objekts in Teilbereiche entsprechend der Erfindung,
Fig. 3 zeigt schematisch einen horizontalen Schnitt durch das in Fig. 2 dargestellte Objekt,
Fig. 4 zeigt schematisch einen horizontalen Schnitt ähnlich Fig. 3 zur Veranschaulichung eines alternativen Vorgehens,
Fig. 5 zeigt schematisch einen horizontalen Schnitt ähnlich Fig. 3 zur Veranschaulichung einer Variante des erfindungsgemäßen Vorgehens,
Fig. 6 bis 8 zeigen schematisch verschiedene Möglichkeiten des Vorgehens für den Fall, dass Scanlinien in einem ersten und zweiten Teilbereichs-Querschnitt in unterschiedlichen Richtungen verlaufen,
Fig. 9 zeigt schematisch das Vorgehen bei einem Scanlinienversatz,
Fig. 10 veranschaulicht den Ablauf eines Verfahrens zur Bereitstellung von Steuerdaten,
Fig. 11 zeigt den schematischen Aufbau einer Vorrichtung zur Bereitstellung von Steuerdaten,
Fig. 12 zeigt ein beispielhaftes Vorgehen zur Vermeidung eines sprunghaften Scanlinienversatzes unmittelbar an der Grenze und
Fig. 13 zeigt ein spezielles Ausführungsbeispiel der Erfindung.

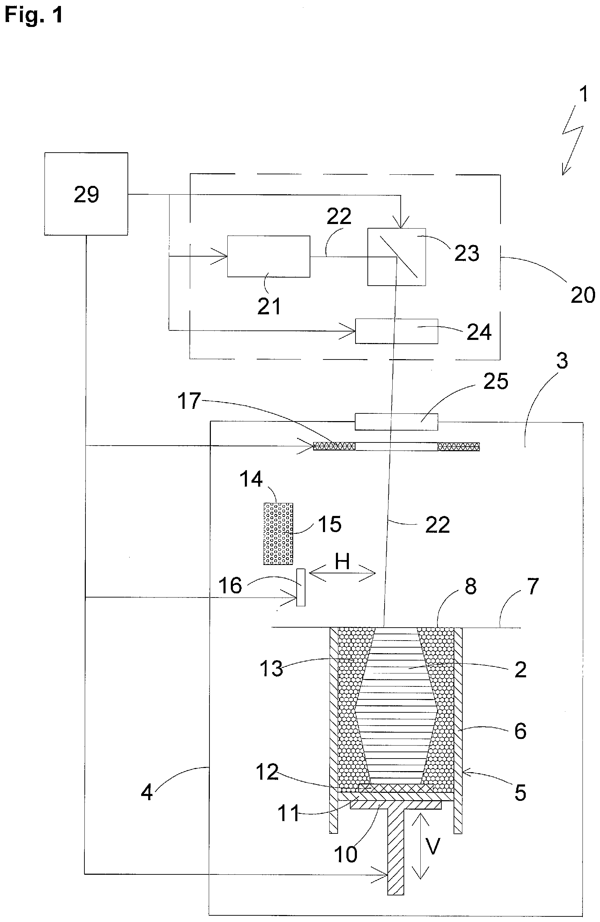

Für eine Beschreibung der Erfindung soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 zum Aufbringen des Aufbaumaterials 15 innerhalb des Baufelds 8. Optional kann in der Prozesskammer 3 eine Heizvorrichtung, z.B. eine Strahlungsheizung 17 angeordnet sein, die zum Beheizen des aufgebrachten Aufbaumaterials dient. Als Strahlungsheizung 17 kann beispielsweise ein Infrarotstrahler vorgesehen sein.

Die beispielhafte additive Herstellvorrichtung 1 enthält ferner eine Energieeintragseinrichtung 20 mit einem Laser 21, der einen Laserstrahl 22 erzeugt, welcher über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Energieeintragseinrichtung als der gezeigten. Um kenntlich zu machen, dass die Gestalt des Strahlungsauftreffbereichs auf dem Aufbaumaterial nicht notwendigerweise annähernd punktförmig, sondern auch flächig sein kann, wird in dieser Anmeldung auch oftmals der Begriff "Strahlbündel" synonym zu "Strahl" verwendet.

Die Lasersintervorrichtung 1 enthält weiterhin eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der additiven Herstellvorrichtung angebracht sein. Die Steuereinrichtung kann eine CPU enthalten, deren Betrieb durch ein Computerprogramm (Software) gesteuert wird. Das Computerprogramm kann getrennt von der additiven Herstellvorrichtung in einer Speichervorrichtung gespeichert sein, von wo aus es (z.B. über ein Netzwerk) in die additive Herstellvorrichtung, insbesondere in die Steuereinrichtung, geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Alle im weiteren Verlauf gemachten Ausführungen gelten nicht nur für Lasersinter- oder - schmelzvorrichtungen, sondern auch für anders geartete generative Schichtbauvorrichtungen, bei denen Wärmeenergie in Form von Strahlung in das Aufbaumaterial eingetragen wird.

In der soeben beispielhaft beschriebenen generativen Schichtbauvorrichtung geht ein Herstellvorgang so vonstatten, dass die Steuereinheit 29 einen Steuerdatensatz (oft auch als Steuerbefehlssatz bezeichnet) abarbeitet.

Durch den Steuerdatensatz wird einer Energieeintragseinrichtung, im Falle der obigen Lasersinter- oder Laserschmelzvorrichtung speziell der Umlenkvorrichtung 23, für jeden Zeitpunkt während des Verfestigungsvorgangs vorgegeben, auf welche Stelle der Arbeitsebene 7 Energiestrahlung richten ist. Natürlich wird in der Praxis eine Trägheit der Umlenkvorrichtung 23 vorliegen, so dass bei einer Veränderung des Auftreffpunktes bzw. -bereichs des Laserstrahls 22 auf der Arbeitsebene 7 mittels der Umlenkvorrichtung 23 sich der Auftreffpunkt bzw. -bereich nicht mit beliebig hoher Geschwindigkeit über die Arbeitsebene 7 bewegen lässt. Auch wenn beispielsweise infolge der Trägheit der Umlenkvorrichtung 23 der Auftreffpunkt des Laserstrahls 22 nicht mit beliebig kleinen Kurvenradien über die Arbeitsebene 7 bewegt werden kann, so hat dies keine Auswirkungen auf die Idee der vorliegenden Erfindung. Die Erfindung hat eine Abänderung der Steuerdaten zum Ziel. Maßnahmen, die zusätzlich infolge der Trägheit beispielsweise einer Strahlablenkvorrichtung vonnöten sind, können unabhängig von dem Vorgehen gemäß der vorliegenden Erfindung getroffen werden.

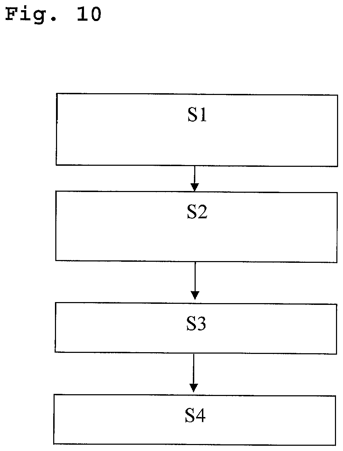

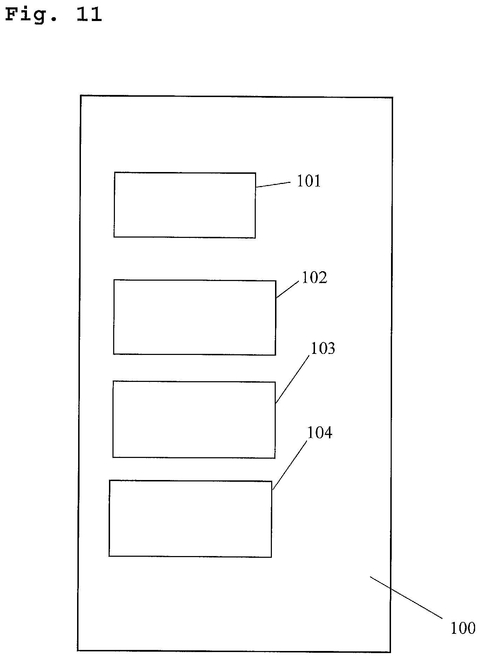

Wie in Fig. 11 gezeigt, enthält eine Vorrichtung 100 zur Bereitstellung von Steuerdaten für eine additive Herstellvorrichtung eine Datenzugriffseinheit 101, eine Segmentierungseinheit 102, eine Datenmodell-Erzeugungseinheit 103 und eine Steuerdaten-Bereitstellungseinheit 104. Die Funktionsweise der Vorrichtung 100 zur Bereitstellung von Steuerdaten wird unter Bezugnahme auf Fig. 10 beschrieben.

In der in Fig. 11 gezeigten Vorrichtung 100 zur Bereitstellung von Steuerdaten für eine additive Herstellvorrichtung greift zunächst die Datenzugriffseinheit 101 auf eine Anzahl, also einen oder mehrere, von Schichtdatensätzen zu, von denen jeder ein Datenmodell eines während der Herstellung selektiv zu verfestigenden Bereichs einer Aufbaumaterialschicht, bevorzugt des gesamten zu verfestigenden Bereichs einer Aufbaumaterialschicht aufweist, der einem Querschnitt eines Objektabschnitts entspricht. In dem in Fig. 10 gezeigten Verfahrensablauf ist dies der erste Schritt S1.

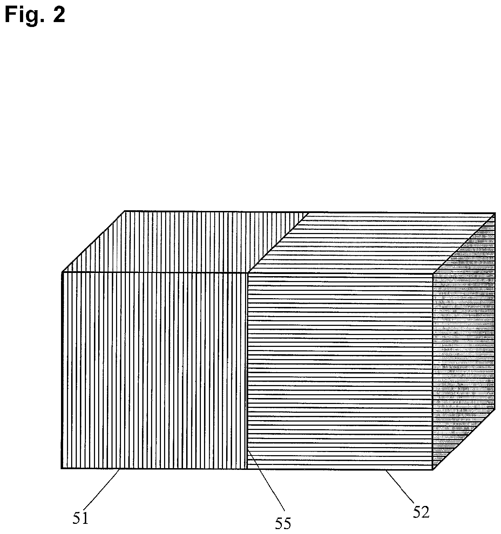

In einem in Fig. 10 gezeigten zweiten Schritt S2 ermittelt die Segmentierungseinheit 102 Teilbereiche eines Objekts bzw. Objektabschnitts, für die unterschiedliche Werte zumindest eines Energieeintragsparameters bei der Verfestigung des Aufbaumaterials vorgegeben sind. In Fig. 2 ist schematisch eine Zerlegung des herzustellenden Objekts 2 in einen ersten Teilbereich 51 und einen zweiten Teilbereich 52 gezeigt. Der Grund für die Wahl unterschiedlicher Energieeintragsparameter in unterschiedlichen Teilbereichen kann beispielsweise durch die Geometrie der Teilbereiche bedingt sein oder aber auch durch veränderte Aufbaumaterialparameter an unterschiedlichen Stellen des Baufelds 7. In diesem Ausführungsbeispiel wird angenommen, dass die Information über die Energieeintragsparameter bereits in den Schichtdatensätzen vorhanden ist, auf die die Datenzugriffseinheit 101 zugreift.

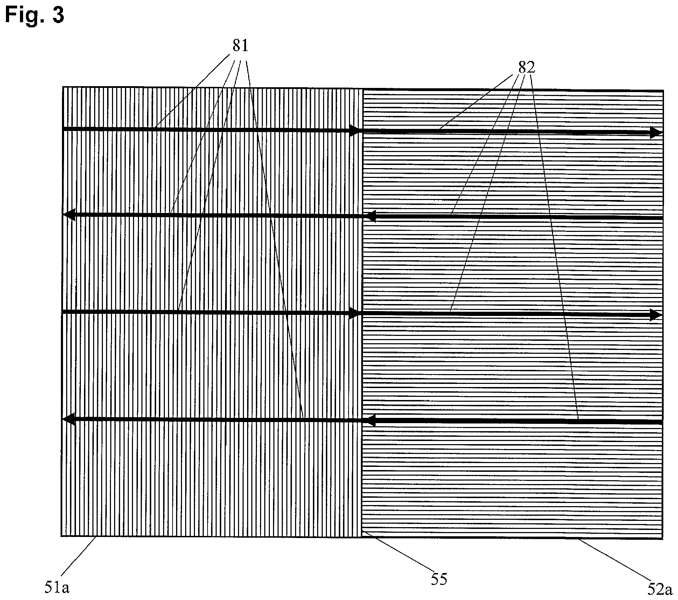

In dem in Fig. 10 gezeigten dritten Schritt S3 spezifiziert nun die Datenmodell-Erzeugungseinheit 103 in zumindest einem Datenmodell, in dem zumindest ein erster Teilbereichs-Querschnitt 51a und ein zweiter Teilbereichs-Querschnitt 52a, die aneinandergrenzen, vorhanden sind, wie zumindest ein Energiestrahlbündel über die beiden Teilbereichs-Querschnitte 51a und 52a zu verfahren ist. Mit anderen Worten wird eine zeitliche Reihenfolge der Abtastung der einzelnen Stellen des ersten Teilbereichs-Querschnitts 51a und des zweiten Teilbereichs-Querschnitts 52a mit Energiestrahlung festgelegt. Hierbei wird spezifiziert, dass ein Energiestrahlbündel an der Grenze 55 zwischen dem ersten Teilbereichs-Querschnitt 51a und dem zweiten Teilbereichs-Querschnitt 52a nicht seine Bewegungsrichtung umkehrt, sondern in einem Zug, während Energiestrahlung dem Aufbaumaterial zugeführt wird, über die Grenze 55 verfahren wird. Das Vorgehen ist beispielhaft in Fig. 3 gezeigt.

Fig. 3 zeigt schematisch einen horizontalen Schnitt durch das in Fig. 2 dargestellte Objekt. Entsprechend sieht man in Fig. 3 eine Draufsicht auf einen ersten Teilbereichs-Querschnitt 51a und einen zweiten Teilbereichs-Querschnitt 52a, die rechteckige Gestalt haben und an einer Grenze 55 aneinandergrenzen. Weiterhin erkennt man Scanlinien 81 in dem ersten Teilbereichs-Querschnitt 51a und Scanlinien 82 in dem zweiten Teilbereichs-Querschnitt 52a. Bei den Scanlinien handelt es sich um Bahnen, entlang derer der Auftreffbereich eines Energiestrahlbündels auf eine Aufbaumaterialschicht über die Schicht hinweg bewegt wird. Die Pfeile in Fig. 3 deuten dabei die Bewegungsrichtung des Energiestrahlbündels an, wobei in dem Beispiel angenommen wird, dass für den ersten Teilbereichs-Querschnitt 51a dasselbe Energiestrahlbündel zur Verfestigung verwendet wird wie für den zweiten Teilbereichs-Querschnitt 52a, was jedoch nicht zwingend so sein muss. Hierbei geht eine erste Scanlinie 81 ohne Unterbrechung in eine zweite Scanlinie 82 über. Die Unterscheidung zwischen ersten Scanlinien 81 und zweiten Scanlinien 82 geschieht hier nur, um hervorzuheben, in welchem der beiden Teilbereichs-Querschnitte 51a und 52a sich der Auftreffbereich des Energiestrahlbündels befindet. Nimmt man an, dass der Auftreffbereich des Energiestrahlbündels eine gewisse Ausdehnung hat, so kann man beispielsweise festlegen, dass sich der Auftreffbereich des Energiestrahlbündels in jenem Teilbereichs-Querschnitt befindet, in dem der größere Flächenanteil des Auftreffbereichs zu einem bestimmten Zeitpunkt liegt.

Da in den beiden Teilbereichs-Querschnitten 51a und 52a zumindest ein Energieeintragsparameter unterschiedlich spezifiziert ist, spezifiziert die Datenmodell-Erzeugungseinheit 103 beim Überfahren der Grenze 55 eine Abänderung dieses zumindest einen Energieeintragsparameters, beispielsweise der Laserleistung.

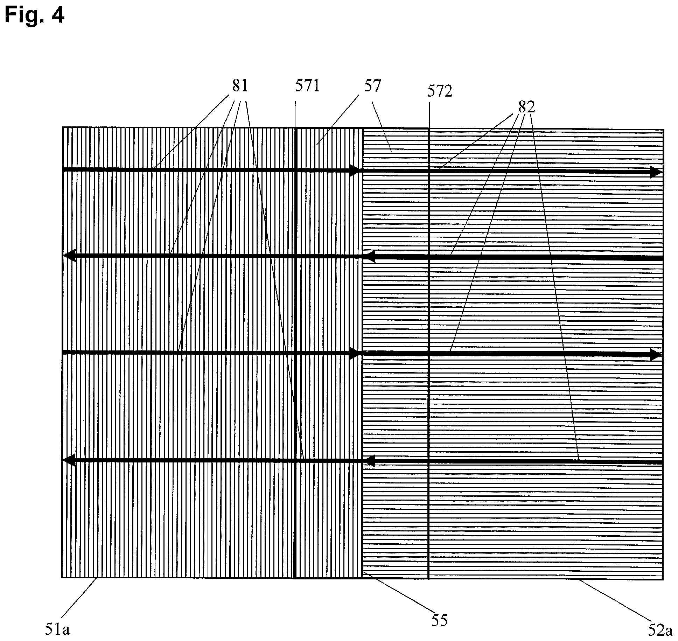

Die Abänderung kann unmittelbar an der Grenze 55 stattfinden, also während der Auftreffbereich des Energiestrahlbündels über die Grenze 55 bewegt wird. In der Regel wird es jedoch auch ausreichen, wenn Energieeintragsparameter innerhalb eines Bereichs nahe der Grenze, also einer Grenzregion 57, wie sie in Fig. 4 dargestellt ist, abgeändert werden. Die Breite dieser Grenzregion 57, also der maximale Abstand der Ränder 571 und 572 der Grenzregion 57 senkrecht zur Grenze 55, hängt dabei von der Größe der Teilbereichs-Querschnitte 51a und 52a und von der Art des sich ändernden Energieeintragsparameters ab. Auch die Schichtdicke und die Art des Aufbaumaterials spielen eine Rolle. Ein Richtwert für die Praxis für den maximalen Abstand sind 1000 µm. In einigen Fällen kann jedoch auch ein kleinerer maximaler Abstand von lediglich 100 µm angebracht sein, während es auch Fälle geben kann, in denen der maximale Abstand einen Wert von bis zu 10000 µm aufweisen kann.

Im Hinblick auf eine möglichst homogene Verfestigung des Aufbaumaterials beim Übergang vom ersten Teilbereich 51 in den zweiten Teilbereich 52 bietet es sich an, sich ändernde Energieeintragsparameter beim Übergang von einem Teilbereich in den anderen nicht abrupt, sondern allmählich abzuändern. Solch eine allmähliche Abänderung kann so realisiert werden, dass ein Energieeintragsparameter in mindestens zwei diskreten Schritten abgeändert wird oder aber in einer Vielzahl von Schritten nahezu kontinuierlich abgeändert wird. Natürlich ist eine vollständig kontinuierliche Abänderung wünschenswert. In der Praxis wird es jedoch infolge der Trägheit bzw. Reaktionszeit der mechanischen und elektrischen Komponenten der Energieeintragseinrichtung stets diskrete minimale Zeitschritte geben, innerhalb derer eine Abänderung stattfinden kann.

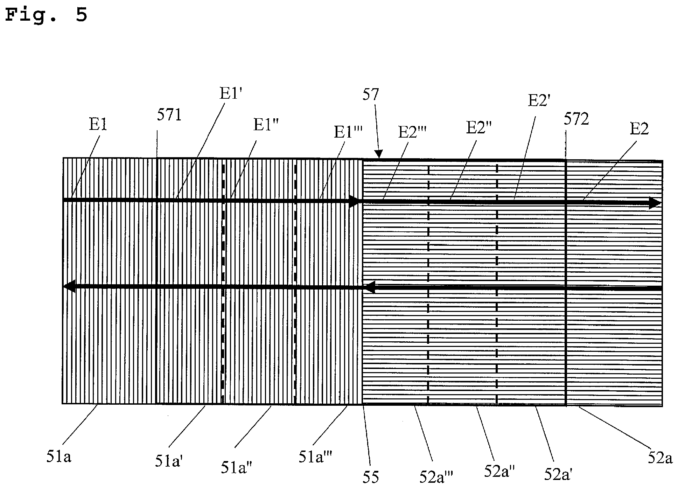

Fig. 5 zeigt eine genauere Veranschaulichung des soeben beschriebenen Vorgehens. Fig. 5 stellt einen Ausschnitt von Fig. 4 dar, bei dem eine Region innerhalb der Grenzregion 57 vergrößert dargestellt ist. In Fig. 5 sind aus Gründen einer eingängigeren Darstellung die Werte eines Energieeintragsparameters, der abgeändert wird, mit E1, E1', E1", E1‴, E2‴, E2", E2', und E2 bezeichnet. Außerhalb der Grenzregion hat der Energieeintragsparameter im ersten Teilbereichs-Querschnitt 51a den Wert E1 und im zweiten Teilbereichs-Querschnitt 52a den Wert E2. Innerhalb der Grenzregion, die durch die Ränder 571 und 572 in der Figur horizontal begrenzt ist, wird der Wert des Energieeintragsparameters stufenweise abgeändert, wobei beim Übergang von E1 zu E1', E1' zu E1", E1" zu E1‴, E1‴ zu E2‴, E2‴ zu E2", E2" zu E2' und E2' zu E2 der Wert des Energieeintragsparameters sich jeweils dem Wert E2 annähert. In den in Fig. 5 von rechts nach links zeigenden Scanlinien erfolgt entsprechend ein schrittweiser Übergang vom Wert E2 des Energieeintragsparameters zum Wert E1 des Energieeintragsparameters. Aus Gründen der Übersichtlichkeit der Figur wurde jedoch auf eine detaillierte Veranschaulichung der jeweiligen Energieeintragsparameterwerte bei den von rechts nach links verlaufenden Scanlinien verzichtet.

Man erkennt in Fig. 5 zu den Rändern 571 und 572 der Grenzregion parallele gestrichelte Linien, die der Veranschaulichung einer speziellen Ausführungsform der Erfindung dienen. Bei dieser speziellen Ausführungsform der Erfindung werden zwei Teilbereiche 51 und 52, in denen der Wert zumindest eines Energieeintragsparameters unterschiedlich ist, nicht unmittelbar nebeneinander angeordnet, sondern es werden in den jeweiligen Querschnitten zusätzliche Zwischen-Teilbereichs-Querschnitte eingeführt. In Fig. 5 sind dies die Zwischen-Teilbereichs-Querschnitte 51a', 51a", 51a‴, 52a‴, 52a" und 52a'. Nimmt man wieder an, dass ein Energieeintragsparameter im Teilbereichs-Querschnitt 51a den Wert E1 hat und im Teilbereichs-Querschnitt 52a den Wert E2 hat, so können in den Zwischen-Teilbereichs-Querschnitten diesen Energieeintragsparametern Zwischenwerte zwischen E1 und E2 zugewiesen werden. Als Folge wird dann jeweils der Wert des Energieeintragsparameters beim Bewegen des Energiestrahlbündels über eine Grenze zwischen zwei (Zwischen)-Teilbereichs-Querschnitten geändert, also beispielsweise beim Verfahren des Energiestrahlbündels über die gestrichelt gezeichnete Grenze zwischen den Zwischen-Teilbereichs-Querschnitten 51a" und 51a‴ vom Wert E1" zum Wert E1‴ hin. Natürlich können nicht nur bezüglich eines Querschnitts Zwischen-Teilbereichs-Querschnitte festgelegt werden, sondern im Schritt S2 kann die Segmentierungseinheit 102 Zwischen-Teilbereiche festlegen, um für einen sanfteren Übergang zwischen dem ersten Teilbereich 51a und dem zweiten Teilbereich 52a zu sorgen.

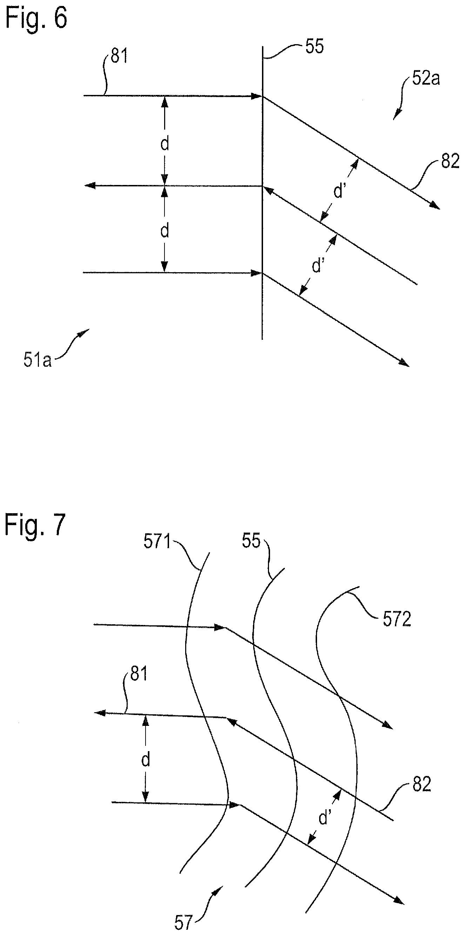

Während in den Beispielen der Figuren 3 bis 5 jeweils die ersten Scanlinien 81 und die zweiten Scanlinien 82 in der gleichen Richtung verlaufen, zeigt Fig. 6 ein Beispiel, bei dem in den beiden Teilbereichs-Querschnitten 51a und 52a die Scanlinien im ersten Teilbereichs-Querschnitt 51a in einer anderen Richtung verlaufen als im zweiten Teilbereichs-Querschnitt 52a. Um diesem Umstand Rechnung zu tragen, erfolgt beim Überqueren der Grenze 55 durch den Auftreffbereich eines Energiestrahlbündels eine Richtungsabänderung der Bewegungsrichtung des Energiestrahlbündels. Die Richtungsabänderung kann dabei während des Energieeintrags in das Aufbaumaterial durch das Energiestrahlbündel geschehen, also ohne Unterbrechung der Bewegung des Energiestrahlbündels über die Aufbaumaterialschicht.

Gerade bei einem krummlinigen Verlauf der Grenze 55 kann es manchmal schwierig sein, die Bewegungsrichtung der Scanlinie(n) abzuändern, ohne Schwankungen im gegenseitigen Abstand der Scanlinien (Hatch-Abstand) in Kauf nehmen zu müssen. Insbesondere für solch einen Fall bietet es sich an, die Richtung der Scanlinien nicht direkt an der Grenze 55, sondern in einer Grenzregion 57, wie sie bereits in Zusammenhang mit den Beispielen der Fig. 4 und 5 eingeführt wurde, abzuändern. Fig. 7 zeigt beispielhaft solch ein Vorgehen.

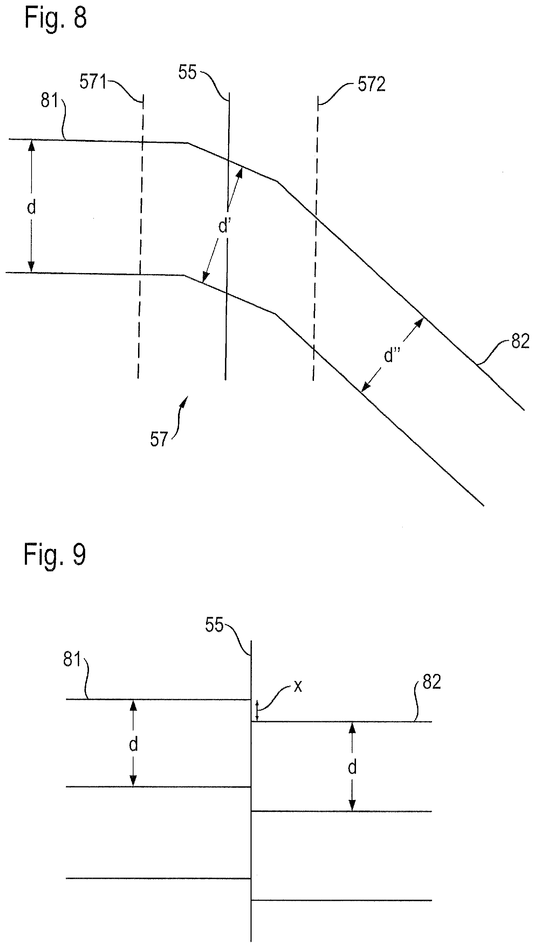

Im Hinblick auf eine möglichst homogene Verfestigung des Aufbaumaterials ist es vorteilhaft, die Richtung der Scanlinien nicht abrupt, sondern allmählich zu ändern. Dies kann innerhalb einer Grenzregion in mindestens zwei diskreten Schritten erfolgen und insbesondere auch in einer Vielzahl von kleinen Schritten, um eine kontinuierliche Änderung der Bewegungsrichtung erzielen zu können. Fig. 8 zeigt hier beispielhaft eine zweimalige Änderung der Verlaufsrichtung der Scanlinien. Hierbei erfolgt innerhalb der Grenzregion 57 ein Richtungswechsel zwischen dem Grenzregion-Rand 571 und der Grenze 55 und ein Richtungswechsel zwischen dem Grenzregion-Rand 572 und der Grenze 55. Die ersten Scanlinien 81 im ersten Teilbereichs-Querschnitt 51a haben dabei außerhalb der Grenzregion 57 den Abstand d und die zweiten Scanlinien 82 im zweiten Teilbereichs-Querschnitt 52a haben dabei außerhalb der Grenzregion 57 den Abstand d". Zwischen den beiden Richtungswechseln in der Grenzregion 57 beträgt der Scanlinienabstand d'. Eine Abänderung der Verlaufsrichtung der Scanlinien in mehreren Schritten hat insbesondere auch den Vorteil, dass der Winkel, um den sich die Bewegungsrichtung ändert, klein ist und einen vorgegebenen Maximalwert, beispielsweise 30°, 10°, 5° oder 1°, nicht überschreitet. Insbesondere kann solch ein Maximalwinkel durch die Trägheit der Ablenkvorrichtung 23 vorgegeben sein.

Wenn sich die Bewegungsrichtung des Energiestrahlbündels ändert, so ändert sich aus geometrischen Gründen auch der gegenseitige Abstand von benachbarten, parallel zueinander verlaufenden Scanlinien, wie man in Fig. 6 erkennt, wo der Scanlinienabstand d im ersten Teilbereichs-Querschnitt (51a) unterschiedlich zum Scanlinienabstand d' im zweiten Teilbereichs-Querschnitt (52a) ist. Wenn ein Energiestrahlbündel über eine Grenze 55 zwischen einem ersten Teilbereichs-Querschnitt 51a und einem zweiten Teilbereichs-Querschnitt 52a bewegt wird, sollte bevorzugt ein Scanlinienversatz an der Grenze einen vorgegebenen Maximalwert nicht überschreiten. Der Sachverhalt ist in Fig. 9 veranschaulicht. Der Einfachheit halber sind in Fig. 9 die ersten Scanlinien 81 parallel zu den zweiten Scanlinien 82. Man erkennt, dass der Scanlinienabstand d zwischen den Scanlinien 81 gleich dem Scanlinienabstand zwischen den zweiten Scanlinien 82 ist und unmittelbar an der Grenze 55 ein Scanlinienversatz x vorhanden ist. Bevorzugt sollte der maximale Versatz von Scanlinien kleiner als die Hälfte des Abstands der ersten Scanlinien zueinander oder der zweiten Scanlinien zueinander sein. Insbesondere kann der maximale Versatz unter Berücksichtigung der Trägheit der Strahlablenkvorrichtung gewählt werden.

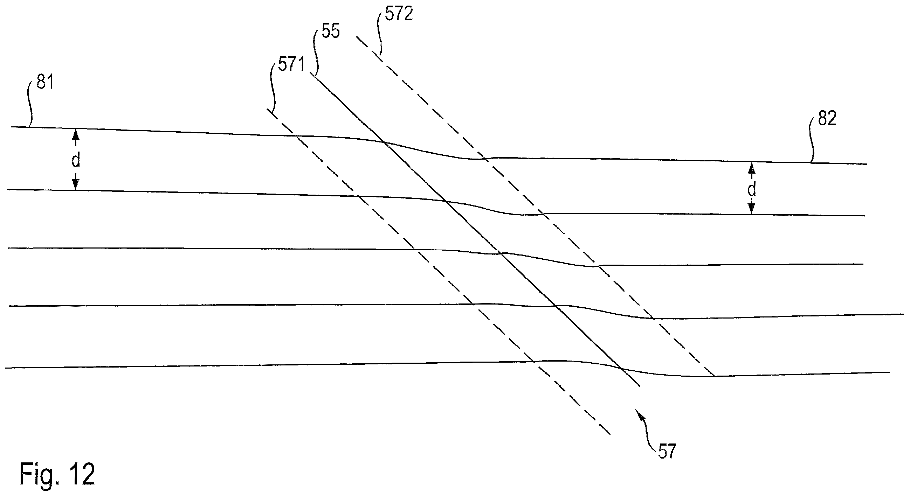

Bei dem in Fig. 12 gezeigten Beispiel wird ein sprunghafter Scanlinienversatz unmittelbar an der Grenze 55 dadurch vermieden, dass innerhalb der Grenzregion 57 allmählich, d.h. in mehreren Schritten, ein Scanlinienversatz erfolgt. In Fig. 12 wird dabei die Lage der Scanlinien in der vertikalen Richtung in der Zeichenebene kontinuierlich geändert.

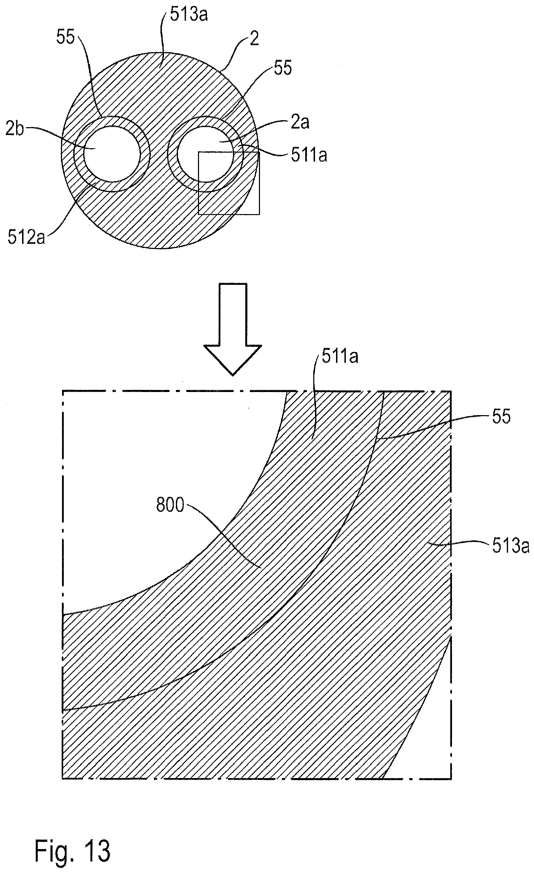

Im Folgenden wird ein Ausführungsbeispiel beschrieben, bei dem die Vorteile des erfinderischen Vorgehens besonders deutlich werden. Fig. 13 zeigt in der oberen Hälfte einen horizontalen Querschnitt durch ein herzustellendes zylindrisches Objekt 2, welches zwei zylindrische Ausnehmungen 2a und 2b aufweist. Bei solch einem Objekt 2 sind die Wände der zylindrischen Ausnehmungen mit besonderer Präzision zu fertigen, da eine Nachbearbeitung dieser Wände nach Fertigstellung des Objekts 2 schwierig ist. Da der Rest des Objekts mit nicht so hoher Präzision hergestellt werden muss, wird für das Bereitstellen von Steuerdaten für die additive Herstellvorrichtung ein CAD-Modell des Objekts 2 zunächst in einen ersten Teilbereich 511, der die Wand der zylindrischen Ausnehmung 2a aufweist, einen zweiten Teilbereich 512, der die Wand der zylindrischen Ausnehmung 2b aufweist, und einen dritten Teilbereich 513, der den Rest des Objekts 2 aufweist, zerlegt. In Fig. 13 spiegelt sich die Zerlegung in den Teilbereichs-Querschnitten 511a, 512a und 513a wider.

In den Teilbereichen 511 und 512 wird zur Erzielung einer hohen Präzision für die Aufbaumaterialschichten eine Schichtdicke von z. B. 20µm festgelegt, wohingegen im Teilbereich 513, der mit nicht so hoher Präzision gefertigt werden muss, eine Schichtdicke von z. B. 40µm festgelegt wird. Für die Herstellung des Objekts 2 bedeutet dies, dass die Aufbaumaterialschichten mit der geringeren Schichtdicke von 20µm aufgetragen werden, wobei in den Teilbereichen 511 und 512 eine Verfestigung des Aufbaumaterials nach jedem Schichtauftrag erfolgt, im Teilbereich 513 jedoch nur nach jedem zweiten Schichtauftrag. Im Teilbereich 513 muss dabei beim Verfestigen soviel Energie in das Aufbaumaterial eingetragen werden, dass das Aufbaumaterial von zwei Schichten von jeweils 20µm bei der Abtastung verfestigt wird.

Für die Bereitstellung von Steuerdaten bedeutet dies, dass in den Datenmodellen der Hälfte der Schichtdatensätze eine Verfestigung lediglich in den Teilbereichen 511 und 512 spezifiziert ist, nicht jedoch im Teilbereich 513. In den Datenmodellen der anderen Hälfte von Schichtdatensätzen wird eine Verfestigung in allen Teilbereichen 511, 512 und 513 spezifiziert, im Teilbereich 513 jedoch mit im Mittel anderem Energieeintrag pro Flächeneinheit als in den Teilbereichen 511 und 512. In jenen Datenmodellen, in denen eine Verfestigung in allen Teilbereichen 511, 512 und 513 spezifiziert wird, wird dabei festgelegt, dass beim Überfahren der Grenze 55 zwischen den Teilbereichen 511 und 513 bzw. 512 und 513 mit dem Energiestrahl, z. B. einem Laser, die einzutragende Energie pro Flächeneinheit abgeändert wird, um den Erfordernissen in dem anderen Teilbereich zu genügen. Dennoch erfolgt beim Überfahren der Grenze im Wesentlichen keine Unterbrechung der Energiezufuhr durch den Energiestrahl in das Aufbaumaterial. Zur Veranschaulichung des Vorgehens zeigt die untere Hälfte von Fig. 13 eine vergrößerte Ansicht des quadratischen Teilausschnitts des in der oberen Hälfte von Fig. 13 gezeigten Objektquerschnitts.

Im Falle der Figur 13 repräsentieren die Schraffurlinien die Scanlinien beim Abtasten des Objektquerschnitts. Man erkennt, dass beispielsweise jene Scanlinie, welche die Grenze 55 an den Kreuzmarkierungen schneidet, in einem Zug zunächst im Teilbereichs-Querschnitt 513a, dann im Teilbereichs-Querschnitt 511a und danach wieder im Teilbereichs-Querschnitt 513a durchlaufen wird.

Bei dem gezeigten Ausführungsbeispiel kann also trotz unterschiedlicher Schichtdicken in den unterschiedlichen Teilbereichen des Objekts dennoch für eine möglichst homogene Verfestigung beim Übergang zwischen Teilbereichen gesorgt werden.

Abschließend sei noch erwähnt, dass eine erfindungsgemäße Vorrichtung 100 zur Bereitstellung von Steuerdaten für eine additive Herstellvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die eingespeisten bzw. ausgegebenen Daten von bereits auf dem gleichen Gerät realisierten anderen Komponenten übernommen werden können, oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem eine Energieeintragseinrichtung zum Eintragen von Energie in das Aufbaumaterial diese Stellen mit mindestens einem Energiestrahlbündel gemäß einem Satz von Energieeintragsparametern abtastet,
wobei das Verfahren zur Bereitstellung von Steuerdaten aufweist:
einen ersten Schritt (S1) des Zugriffs auf computerbasierte Modelldaten zumindest eines Abschnitts des herzustellenden Objekts,
einen zweiten Schritt (S2) des Festlegens eines ersten Teilbereichs (51) und eines zweiten Teilbereichs (52) innerhalb des zumindest einen Objektabschnitts, die an einer Grenze (55) aneinander grenzen,
einen dritten Schritt (S3) des Erzeugens zumindest eines Datenmodells eines zur Herstellung des zumindest einen Objektabschnitts selektiv zu verfestigenden Bereichs einer Aufbaumaterialschicht, in welchem ein erster Teilbereichs-Querschnitt (51a) den ersten Teilbereich (51) schneidet und ein zweiter Teilbereichs-Querschnitt (52a) den zweiten Teilbereich (52) schneidet, wobei in dem Datenmodell spezifiziert wird, dass im ersten Teilbereichs-Querschnitt (51a) zumindest ein Energieeintragsparameter im Mittel einen anderen Wert aufweist als im zweiten Teilbereichs-Querschnitt (52a) und während des Eintragens von Energie in das Aufbaumaterial durch das zumindest eine Energiestrahlbündel das zumindest eine Energiestrahlbündel mehrmals über die Grenze (55) verfahren wird
und
einen vierten Schritt (S4), in dem Steuerdaten entsprechend dem im dritten Schritt (S3) erzeugten zumindest einen Datenmodell für die Generierung eines Steuerdatensatzes für die additive Herstellvorrichtung bereitgestellt werden
wobei im dritten Schritt Datenmodelle von n+1 aufeinanderfolgenden Aufbaumaterialschichten erzeugt werden, wobei n eine natürliche Zahl ist, wobei in den Datenmodellen von n aufeinanderfolgenden Aufbaumaterialschichten eine Abtastung des Aufbaumaterials mit dem zumindest einen Energiestrahlbündel nur im ersten Teilbereichs-Querschnitt (51a), nicht jedoch im zweiten Teilbereichs-Querschnitt (52a) spezifiziert ist und in dem Datenmodell der darauffolgenden n+1 - ten Aufbaumaterialschicht eine Abtastung des Aufbaumaterials im ersten Teilbereichs-Querschnitt (51a) und im zweiten Teilbereichs-Querschnitt (52a) spezifiziert ist,
wobei im dritten Schritt der Wert zumindest eines Energieeintragsparameter innerhalb einer Grenzregion (57) verändert wird, welche eine Region in der durch das Datenmodell beschriebenen Aufbaumaterialschicht auf zumindest einer Seite der Grenze (55) ist, in welcher die zu verfestigenden Stellen einen maximalen Abstand von 2000 µm, bevorzugter 1500 µm, noch bevorzugter 1000 µm, noch weiter bevorzugt 100 µm, am Bevorzugtesten 50 µm zur Grenze (55) aufweisen.

2. Verfahren nach Anspruch 1, bei dem im ersten Schritt (S1) auf Modelldaten zugegriffen wird, die eine Anzahl von Schichtdatensätzen aufweisen, von denen jeder Schichtdatensatz ein Datenmodell eines während der Herstellung selektiv zu verfestigenden Bereichs einer Aufbaumaterialschicht aufweist, der einem Querschnitt des Objektabschnitts entspricht.

3. Verfahren nach Anspruch 1 oder 2, bei dem der Wert zumindest eines Energieeintragsparameters unmittelbar beim Überfahren der Grenze (55) abgeändert wird.

4. Verfahren nach Anspruch 1 oder 2, bei dem der Wert zumindest eines Energieeintragsparameters innerhalb der Grenzregion (57) allmählich abgeändert wird.

5. Verfahren nach einem der Ansprüche 1 bis 4, bei dem das zumindest eine Energiestrahlbündel das Aufbaumaterial im ersten Teilbereichs-Querschnitt (51a) entlang von ersten Scanlinien (81) abtastet und das Aufbaumaterial im zweiten Teilbereichs-Querschnitt (52a) entlang von zweiten Scanlinien (82) abtastet, wobei erste Scanlinien (81) innerhalb des ersten Teilbereichs-Querschnitts (51a) in der Grenzregion (57), insbesondere an der Grenze (55), in der gleichen Richtung verlaufen wie zweite Scanlinien (82) innerhalb des zweiten Teilbereichs-Querschnitts (52a).

6. Verfahren nach einem der Ansprüche 1 bis 4, bei dem das zumindest eine Energiestrahlbündel das Aufbaumaterial im ersten Teilbereichs-Querschnitt (51a) entlang von ersten Scanlinien (81) abtastet und das Aufbaumaterial im zweiten Teilbereichs-Querschnitt (52a) entlang von zweiten Scanlinien (82) abtastet, wobei die ersten Scanlinien (81) und die zweiten Scanlinien (82) in der Grenzregion, insbesondere an der Grenze (55), einen von 0° verschiedenen Winkel zueinander aufweisen.

7. Verfahren nach Anspruch 6, bei dem die Verlaufsrichtungen der ersten Scanlinien (81) und/oder der zweiten Scanlinien (82) sich innerhalb der Grenzregion (57) allmählich ändern.

8. Verfahren nach einem der Ansprüche 1 bis 7, bei dem das zumindest eine Energiestrahlbündel das Aufbaumaterial im ersten Teilbereichs-Querschnitt (51a) entlang von ersten Scanlinien (81) abtastet und das Aufbaumaterial im zweiten Teilbereichs-Querschnitt (52a) entlang von zweiten Scanlinien (82) abtastet, wobei innerhalb der Grenzregion (57), insbesondere unmittelbar an der Grenze (55), ein Versatz von ersten und/oder zweiten Scanlinien um einen Betrag stattfindet, der kleiner der Hälfte des Abstands zwischen den ersten Scanlinien (81) oder zweiten Scanlinien (82) ist.

9. Verfahren nach einem der Ansprüche 1 bis 8, bei dem das zumindest eine Energiestrahlbündel das Aufbaumaterial im ersten Teilbereichs-Querschnitt (51a) entlang von ersten Scanlinien (81) abtastet und das Aufbaumaterial im zweiten Teilbereichs-Querschnitt (52a) entlang von zweiten Scanlinien (82) abtastet, wobei der Abstand zwischen ersten Scanlinien (81) im ersten Teilbereichs-Querschnitt (51a) gleich dem Abstand zwischen zweiten Scanlinien (82) im zweiten Teilbereichs-Querschnitt (52a) ist.

10. Additives Herstellverfahren zur Herstellung eines dreidimensionalen Objekts, wobei das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen zum Eintragen von Energie in das Aufbaumaterial mit mindestens einem Energiestrahlbündel gemäß einem Satz von Energieeintragsparametern abgetastet werden,
wobei der Ablauf des additiven Herstellverfahrens durch einen Steuerdatensatz gesteuert wird, der unter Verwendung eines Verfahrens nach einem der Ansprüche 1 bis 9 generiert wurde.

11. Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem eine Energieeintragseinrichtung diese Stellen zum Eintragen von Energie in das Aufbaumaterial mit mindestens einem Energiestrahlbündel gemäß einem Satz von Energieeintragsparametern abtastet,
wobei die Vorrichtung zur Bereitstellung von Steuerdaten aufweist:
eine Datenzugriffseinheit (101) die ausgelegt ist zum Zugriff auf computerbasierte Modelldaten zumindest eines Abschnitts des herzustellenden Objekts,
eine Segmentierungseinheit (102), die ausgelegt ist, einen ersten Teilbereich (51) und einen zweiten Teilbereich (52) innerhalb des zumindest einen Objektabschnitts, die an einer Grenze (55) aneinander grenzen, festzulegen,
eine Datenmodell-Erzeugungseinheit (103), die ausgelegt ist, zumindest ein Datenmodell eines zur Herstellung des zumindest einen Objektabschnitts selektiv zu verfestigenden Bereichs einer Aufbaumaterialschicht, in welchem ein erster Teilbereichs-Querschnitt (51a) den ersten Teilbereich (51) schneidet und ein zweiter Teilbereichs-Querschnitt (52a) den zweiten Teilbereich (52) schneidet, zu erzeugen, wobei in dem Datenmodell spezifiziert ist, dass im ersten Teilbereichs-Querschnitt (51a) zumindest ein Energieeintragsparameter im Mittel einen anderen Wert aufweist als im zweiten Teilbereichs-Querschnitt (52a) und während des Eintragens von Energie in das Aufbaumaterial durch das zumindest eine Energiestrahlbündel das zumindest eine Energiestrahlbündel mehrmals über die Grenze (55) verfahren wird,
und
eine Steuerdaten-Bereitstellungseinheit (104), die ausgelegt ist, Steuerdaten entsprechend dem durch die Datenmodell-Erzeugungseinheit (103) erzeugten zumindest einen Datenmodell für die Generierung eines Steuerdatensatzes für die additive Herstellvorrichtung bereit zu stellen,
wobei die Datenmodell-Erzeugungseinheit (103) ausgelegt ist, Datenmodelle von n+1 aufeinanderfolgenden Aufbaumaterialschichten zu erzeugen, wobei n eine natürliche Zahl ist, wobei in den Datenmodellen von n aufeinanderfolgenden Aufbaumaterialschichten eine Abtastung des Aufbaumaterials mit dem zumindest einen Energiestrahlbündel nur im ersten Teilbereichs-Querschnitt (51a), nicht jedoch im zweiten Teilbereichs-Querschnitt (52a) spezifiziert ist und in dem Datenmodell der darauffolgenden n+1 - ten Aufbaumaterialschicht eine Abtastung des Aufbaumaterials im ersten Teilbereichs-Querschnitt (51a) und im zweiten Teilbereichs-Querschnitt (52a) spezifiziert ist,
wobei die Datenmodell-Erzeugungseinheit (103) ausgelegt ist, den Wert zumindest eines Energieeintragsparameter innerhalb einer Grenzregion (57) zu verändern, welche eine Region in der durch das Datenmodell beschriebenen Aufbaumaterialschicht auf zumindest einer Seite der Grenze (55) ist, in welcher die zu verfestigenden Stellen einen maximalen Abstand von 2000 µm, bevorzugter 1500 µm, noch bevorzugter 1000 µm, noch weiter bevorzugt 100 µm, am Bevorzugtesten 50 µm zur Grenze (55) aufweisen.

12. Computerprogramm, mit Programmcodemitteln, um alle Schritte eines Verfahrens gemäß einem der Ansprüche 1 bis 9 auszuführen, wenn das Computerprogramm mittels eines Datenprozessors, insbesondere eines mit einer additiven Herstellvorrichtung zusammenwirkenden Datenprozessors, ausgeführt wird.

13. Additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen zum Eintragen von Energie in das Aufbaumaterial mit mindestens einem Energiestrahlbündel gemäß einem Satz von Energieeintragsparametern abgetastet werden, wobei die additive Herstellvorrichtung aufweist:
eine Schichtaufbringvorrichtung, die geeignet ist, eine Schicht eines Aufbaumaterials auf eine bereits vorhandene, bevorzugt bereits selektiv verfestigte, Aufbaumaterialschicht aufzubringen,
eine Energieeintragsvorrichtung, die geeignet ist, die dem Querschnitt des Objekts in einer Schicht zugeordneten Stellen mit mindestens einem Energiestrahlbündel abzutasten, und
eine Steuereinheit, die so eingerichtet ist, dass sie zur Steuerung der Herstellung des Objekts ein Computerprogramm nach Anspruch 12 ausführt.

## Claims

1. A computer-based method of providing control data for an additive manufacturing apparatus for manufacturing a three-dimensional object, wherein by means of the additive manufacturing apparatus the object is manufactured by applying a building material layer by layer and by solidifying the building material by supplying radiant energy to positions in each layer that are assigned to the cross-section of the object in that layer in that by an energy input unit these positions are scanned with at least one energy beam so that energy is input into the building material according to a set of energy input parameters,
wherein the method of providing control data comprises:
a first step (S1) of accessing computer-based model data of at least one portion of the object to be manufactured,
a second step (S2) of determining a first partial region (51) and a second partial region (52) inside of the at least one object portion, which are abutting each other at a border (55),
a third step (S3) of generating at least one data model of a region of a building material layer to be selectively solidified in order to manufacture the at least one object portion, in which a first partial region cross-section (51a) intersects the first partial region (51) and a second partial region cross-section (52a) intersects the second partial region (52), wherein it is specified in the data model that in said first partial region cross-section (51a) at least one energy input parameter on average has a different value than in said second partial region cross-section (52a) and that the at least one energy beam is moved across the border (55) several times while inputting energy into the building material by the at least one energy beam, and
a fourth step (S4), in which control data are provided for the generation of a control dataset for the additive manufacturing apparatus, said control data corresponding to the at least one data model generated in the third step (S3),
wherein in the third step data models of n+1 consecutive building material layers are generated, n being a natural number, wherein in the data models of n consecutive building material layers a scanning of the building material with the at least one energy beam is specified only in the first partial region cross-section (51a) but not in the second partial region cross-section (52a) and in the data model of the following (n+1)-th building material layer a scanning of the building material in the first partial region cross-section (51a) and in the second partial region cross-section (52a) is specified,
wherein in the third step the value of at least one energy input parameter is changed inside of a border region (57), said border region being a region on at least one side of the border (55) in said building material layer described by the data model, the positions to be solidified in said region having a maximum distance of 2000 µm, more preferably 1500 µm, even more preferably 1000 µm, even further preferably 100 µm, most preferably 50 µm, to the border (55).

2. The method of claim 1, wherein in the first step (S1) model data are accessed that comprise a number of layer datasets, wherein each layer dataset comprises a data model of a region of a building material layer to be selectively solidified during the manufacturing, said region corresponding to a cross-section of the object portion.

3. The method of claim 1 or 2, wherein the value of at least one energy input parameter is changed immediately when crossing the border (55).

4. The method of claim 1 or 2, wherein the value of at least one energy input parameter is gradually changed inside of said border region (57).

5. The method of one of claims 1 to 4, wherein the at least one energy beam scans the building material in said first partial region cross-section (51a) along first scan lines (81) and scans the building material in said second partial region cross-section (52a) along second scan lines (82), wherein in said border region (57), in particular at the border (55), first scan lines (81) in the first partial region cross-section (51a) extend in the same direction as second scan lines (82) in the second partial region cross-section (52a).

6. The method of one of claims 1 to 4, wherein the at least one energy beam scans the building material in said first partial region cross-section (51a) along first scan lines (81) and scans the building material in said second partial region cross-section (52a) along second scan lines (82), wherein in said border region, in particular at the border (55), said first scan lines (81) and said second scan lines (82) are at an angle relative to one another that is different from 0°.

7. The method of claim 6, wherein the extension directions of the first scan lines (81) and/or of the second scan lines (82) are gradually changed inside of the border region (57).

8. The method of one of claims 1 to 7, wherein the at least one energy beam scans the building material in said first partial region cross-section (51a) along first scan lines (81) and scans the building material in said second partial region cross-section (52a) along second scan lines (82), wherein in said border region (57), in particular immediately at the border (55), said first scan lines and/or said second scan lines are displaced by an amount that is smaller than half the pitch of the first scan lines (81) or the second scan lines (82).

9. The method of one of claims 1 to 8, wherein the at least one energy beam scans the building material in said first partial region cross-section (51a) along first scan lines (81) and scans the building material in said second partial region cross-section (52a) along second scan lines (82), wherein the pitch of the first scan lines (81) in the first partial region cross-section (51a) equals the pitch of the second scan lines (82) in the second partial region cross-section (52a).

10. An additive manufacturing method of manufacturing a three-dimensional object, wherein the object is manufactured by applying a building material layer by layer and by solidifying the building material by supplying radiant energy to positions in each layer that are assigned to the cross-section of the object in that layer in that these positions are scanned with at least one energy beam so that energy is input into the building material according to a set of energy input parameters,
wherein the process of the additive manufacturing method is controlled by a control dataset generated using a method of one of claims 1 to 9.

11. A device of providing control data for an additive manufacturing apparatus for manufacturing a three-dimensional object, wherein the object is manufactured by means of the additive manufacturing apparatus by applying a building material layer by layer and by solidifying the building material by supplying radiant energy to positions in each layer that are assigned to the cross-section of the object in that layer in that by an energy input unit these positions are scanned with at least one energy beam so that energy is input into the building material according to a set of energy input parameters,
wherein the device of providing control data comprises:
a data access unit (101) configured to access computer-based model data of at least one portion of the object to be manufactured,
a segmentation unit (102) configured to determine a first partial region (51) and a second partial region (52) inside of the at least one object portion, which are abutting each other at a border (55),
a data model generation unit (103) that is configured to generate at least one data model of a region of a building material layer to be selectively solidified in order to manufacture the at least one object portion, in which a first partial region cross-section (51a) intersects the first partial region (51) and a second partial region cross-section (52a) intersects the second partial region (52), wherein it is specified in the data model that in said first partial region cross-section (51a) at least one energy input parameter on average has a different value than in said second partial region cross-section (52a) and that the at least one energy beam is moved across the border (55) several times while inputting energy into the building material by the at least one energy beam,
and
a control data provision unit (104) that is configured to provide control data for the generation of a control dataset for the additive manufacturing apparatus, said control data corresponding to the at least one data model generated by the data model generation unit (103),
wherein the data model generation unit (103) is configured to generate data models of n+1 consecutive building material layers, n being a natural number, wherein in the data models of n consecutive building material layers a scanning of the building material with the at least one energy beam is specified only in the first partial region cross-section (51a) but not in the second partial region cross-section (52a) and in the data model of the following (n+1)-th building material layer a scanning of the building material in the first partial region cross-section (51a) and in the second partial region cross-section (52a) is specified,
wherein the data model generation unit (103) is configured to change the value of at least one energy input parameter inside of a border region (57), said border region being a region on at least one side of the border (55) in said building material layer described by the data model, the positions to be solidified in said region having a maximum distance of 2000 µm, more preferably 1500 µm, even more preferably 1000 µm, even further preferably 100 µm, most preferably 50 µm, to the border (55).

12. A computer program having program code means to perform all steps of a method according to one of claims 1 to 9 when the computer program is executed by a data processor, in particular a data processor interacting with an additive manufacturing apparatus.

13. An additive manufacturing apparatus for manufacturing a three-dimensional object, wherein the object is manufactured in the additive manufacturing apparatus by applying a building material layer by layer and by solidifying the building material by supplying radiant energy to positions in each layer that are assigned to the cross-section of the object in that layer in that these positions are scanned with at least one energy beam so that energy is input into the building material according to a set of energy input parameters, wherein said additive manufacturing apparatus comprises:
a layer application unit configured to apply a layer of a building material onto a building material layer that already exists and preferably has already been selectively solidified,
an energy input unit configured to scan with at least one energy beam the positions in a layer assigned to the cross-section of the object, and
a control unit configured to execute a computer program of claim 12 in order to control the manufacture of the object.

## Revendications

1. Procédé assisté par ordinateur pour fournir des données de commande pour un appareil de fabrication additive pour fabriquer un objet tridimensionnel, dans lequel l'objet est fabriqué au moyen de l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche, par le fait qu'un dispositif d'introduction d'énergie pour introduire de l'énergie dans le matériau de construction balaie ces positions avec au moins un faisceau d'énergie de rayonnement selon un ensemble de paramètres d'introduction d'énergie,
dans lequel le procédé pour fournir des données de commande comprend :
une première étape (S1) d'accès à des données de modèle de type informatique d'au moins une partie de l'objet à fabriquer,
une deuxième étape (S2) de définition d'une première zone partielle (51) et d'une deuxième zone partielle (52) à l'intérieur de l'au moins une partie d'objet, qui sont adjacentes l'une à l'autre au niveau d'une limite (55),
une troisième étape (S3) de génération d'au moins un modèle de données d'une zone d'une couche de matériau de construction à solidifier sélectivement pour fabriquer l'au moins une partie d'objet, dans laquelle une première section transversale de zone partielle (51a) coupe la première zone partielle (51) et une deuxième section transversale de zone partielle (52a) coupe la deuxième zone partielle (52), dans lequel il est spécifié dans le modèle de données que dans la première section transversale de zone partielle (51a) au moins un paramètre d'introduction d'énergie présente en moyenne une valeur différente de celle dans la deuxième section transversale de zone partielle (52a) et, pendant l'introduction d'énergie de rayonnement dans le matériau de construction par l'au moins un faisceau d'énergie de rayonnement, l'au moins un faisceau d'énergie de rayonnement est déplacé plusieurs fois au-delà de la limite (55),
et
une quatrième étape (S4) dans laquelle des données de commande correspondant à l'au moins un modèle de données généré dans la troisième étape (S3) sont fournies pour générer un ensemble de données de commande pour l'appareil de fabrication additive,
dans lequel, dans la troisième étape, des modèles de données de n+1 couches successives de matériau de construction sont générés, n étant un nombre naturel, dans lequel, dans les modèles de données de n couches successives de matériau de construction, un balayage du matériau de construction avec l'au moins un faisceau d'énergie de rayonnement seulement est spécifié dans la première section transversale de zone partielle (51a), mais pas dans la deuxième section transversale de zone partielle (52a) et, dans le modèle de données de la n+1ème couche successive de matériau de construction, un balayage du matériau de construction est spécifié dans la première section transversale de zone partielle (51a) et dans la deuxième section transversale de zone partielle (52a),
dans lequel, dans la troisième étape, la valeur d'au moins un paramètre d'introduction d'énergie est modifiée à l'intérieur d'une région limite (57), qui est une région dans la couche de matériau de construction décrite par le modèle de données sur au moins un côté de la limite (55), dans laquelle les positions à solidifier présentent une distance maximale de 2000 µm, de préférence de 1500 µm, de manière davantage préférée de 1000 µm, de manière encore davantage préférée de 100 µm, de manière préférée entre toutes de 50 µm par rapport à la limite (55).

2. Procédé selon la revendication 1, dans lequel, dans la première étape (S1), on accède à des données de modèle qui présentent un nombre d'ensembles de données de couche, dont chaque ensemble de données de couche présente un modèle de données d'une zone à solidifier sélectivement pendant la fabrication d'une couche de matériau de construction, qui correspond à une section transversale de la partie d'objet.

3. Procédé selon la revendication 1 ou 2, dans lequel la valeur d'au moins un paramètre d'apport d'énergie est modifiée immédiatement lors du franchissement de la limite (55).

4. Procédé selon la revendication 1 ou 2, dans lequel la valeur d'au moins un paramètre d'apport d'énergie est modifiée progressivement à l'intérieur de la région limite (57).

5. Procédé selon l'une quelconque des revendications 1 à 4, dans lequel l'au moins un faisceau d'énergie de rayonnement balaye le matériau de construction dans la première section transversale de région partielle (51a) le long de premières lignes de balayage (81) et balaye le matériau de construction dans la deuxième section transversale de région partielle (52a) le long de deuxièmes lignes de balayage (82), dans lequel des premières lignes de balayage (81) s'étendent à l'intérieur de la première section transversale de région partielle (51a) dans la région limite (57), en particulier au niveau de la limite (55), dans la même direction que des deuxièmes lignes de balayage (82) à l'intérieur de la deuxième section transversale de région partielle (52a).

6. Procédé selon l'une quelconque des revendications 1 à 4, dans lequel l'au moins un faisceau d'énergie de rayonnement balaye le matériau de construction dans la première section transversale de région partielle (51a) le long de premières lignes de balayage (81) et balaye le matériau de construction dans la deuxième section transversale de région partielle (52a) le long de deuxièmes lignes de balayage (82), dans lequel les premières lignes de balayage (81) et les deuxièmes lignes de balayage (82) dans la région limite, en particulier au niveau de la limite (55), présentent un angle différent de 0° l'une par rapport à l'autre.

7. Procédé selon la revendication 6, dans lequel les directions d'extension des premières lignes de balayage (81) et/ou des deuxièmes lignes de balayage (82) se modifient progressivement à l'intérieur de la région limite (57).

8. Procédé selon l'une quelconque des revendications 1 à 7, dans lequel l'au moins un faisceau d'énergie de rayonnement balaye le matériau de construction dans la première section transversale de région partielle (51a) le long de premières lignes de balayage (81) et balaye le matériau de construction dans la deuxième section transversale de région partielle (52a) le long de deuxièmes lignes de balayage (82), dans lequel, à l'intérieur de la région limite (57), en particulier directement au niveau de la limite (55), un décalage de premières et/ou de deuxièmes lignes de balayage est effectué à une valeur inférieure à à la moitié de la distance entre les premières lignes de balayage (81) ou les deuxièmes lignes de balayage (82).

9. Procédé selon l'une quelconque des revendications 1 à 8, dans lequel l'au moins un faisceau d'énergie de rayonnement balaye le matériau de construction dans la première section transversale de région partielle (51a) le long de premières lignes de balayage (81) et balaye le matériau de construction dans la deuxième section transversale de région partielle (52a) le long de deuxièmes lignes de balayage (82), dans lequel la distance entre les premières lignes de balayage (81) dans la première section transversale de région partielle (51a) est égale à la distance entre les deuxièmes lignes de balayage (82) dans la deuxième section transversale de région partielle (52a).

10. Procédé de fabrication additive pour fabriquer un objet tridimensionnel, dans lequel l'objet est fabriqué en appliquant un matériau de construction couche par couche et en solidifiant le matériau de construction en fournissant de l'énergie de rayonnement à des positions dans chaque couche qui sont associées à la section transversale de l'objet dans cette couche, par le fait que ces positions pour introduire de l'énergie de rayonnement dans le matériau de construction sont balayées avec au moins un faisceau d'énergie de rayonnement selon un ensemble de paramètres d'introduction d'énergie,
dans lequel le déroulement du procédé de fabrication additive est commandé par un ensemble de données de commande généré en utilisant un procédé selon l'une quelconque des revendications 1 à 9.

11. Appareil pour fournir des données de commande pour un appareil de fabrication additive pour fabriquer un objet tridimensionnel, dans lequel l'objet est fabriqué au moyen de l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche, par le fait qu'un dispositif d'introduction d'énergie balaie ces positions pour introduire de l'énergie de rayonnement dans le matériau de construction avec au moins un faisceau d'énergie de rayonnement selon un ensemble de paramètres d'introduction d'énergie,
dans lequel l'appareil pour fournir des données de commande comprend :
une unité d'accès de données (101) qui est conçue pour accéder à des données de modèle de type informatique d'au moins une partie de l'objet à fabriquer,
une unité de segmentation (102) qui est conçue pour définir une première zone partielle (51) et une deuxième zone partielle (52) à l'intérieur de l'au moins une partie d'objet, qui sont adjacentes l'une à l'autre au niveau d'une limite (55),
une unité de génération de modèle de données (103) qui est conçue pour générer au moins un modèle de données d'une zone d'une couche de matériau de construction à solidifier sélectivement pour fabriquer l'au moins une partie d'objet, dans laquelle une première section transversale de zone partielle (51a) coupe la première zone partielle (51) et une deuxième section transversale de zone partielle (52a) coupe la deuxième zone partielle (52), dans lequel il est spécifié dans le modèle de données que dans la première section transversale de zone partielle (51a) au moins un paramètre d'introduction d'énergie présente en moyenne une valeur différente de celle dans la deuxième section transversale de zone partielle (52a) et, pendant l'introduction d'énergie de rayonnement dans le matériau de construction par l'au moins un faisceau d'énergie de rayonnement, l'au moins un faisceau d'énergie de rayonnement est déplacé plusieurs fois au-delà de la limite (55),
et
une unité de fourniture de données de commande (104) qui est conçue pour fournir des données de commande correspondant à l'au moins un modèle de données généré par l'unité de génération de modèle de données (103) pour générer un ensemble de données de commande pour l'appareil de fabrication additive,
dans lequel l'unité de génération de modèle de données (103) est conçue pour générer des modèles de données de n+1 couches successives de matériau de construction, n étant un nombre naturel, dans lequel, dans les modèles de données de n couches successives de matériau de construction, un balayage du matériau de construction avec l'au moins un faisceau d'énergie de rayonnement seulement est spécifié dans la première section transversale de zone partielle (51a), mais pas dans la deuxième section transversale de zone partielle (52a) et, dans le modèle de données de la n+1ème couche successive de matériau de construction, un balayage du matériau de construction est spécifié dans la première section transversale de zone partielle (51a) et dans la deuxième section transversale de zone partielle (52a),
dans lequel l'unité de génération de modèle de données (103) est conçue pour modifier la valeur d'au moins un paramètre d'introduction d'énergie à l'intérieur d'une région limite (57), qui est une région dans la couche de matériau de construction décrite par le modèle de données sur au moins un côté de la limite (55), dans laquelle les positions à solidifier présentent une distance maximale de 2000 µm, de préférence de 1500 µm, de manière davantage préférée de 1000 µm, de manière encore davantage préférée de 100 µm, de manière préférée entre toutes de 50 µm par rapport à la limite (55).

12. Programme informatique, comprenant des moyens de code de programme pour exécuter toutes les étapes d'un procédé selon l'une quelconque des revendications 1 à 9 lorsque le programme informatique est exécuté au moyen d'un processeur de données, en particulier d'un processeur de données coopérant avec un dispositif de fabrication additive.

13. Appareil de fabrication additive pour fabriquer un objet tridimensionnel, dans lequel l'objet est fabriqué dans l'appareil de fabrication additive en appliquant un matériau de construction couche par couche et en solidifiant le matériau de construction en fournissant de l'énergie de rayonnement à des positions dans chaque couche qui sont associées à la section transversale de l'objet dans cette couche, par le fait que ces positions pour introduire de l'énergie de rayonnement dans le matériau de construction sont balayées avec au moins un faisceau d'énergie de rayonnement selon un ensemble de paramètres d'introduction d'énergie, dans lequel l'appareil de fabrication additive comprend :
un dispositif d'application de couche qui est adapté pour appliquer une couche d'un matériau de construction sur une couche de matériau de construction déjà présente, de préférence déjà solidifiée sélectivement,
un dispositif d'introduction d'énergie qui est adapté pour balayer les positions associées à la section transversale de l'objet dans une couche avec au moins un faisceau d'énergie de rayonnement, et
une unité de commande qui est conçue pour exécuter un programme informatique selon la revendication 12 pour commander la fabrication de l'objet.
